# EUROPEAN PATENT APPLICATION

(11) **EP 1 254 687 A2**
(43) Date of publication of application: **06.11.2002**
(21) Application number: 02252177.7
(22) Date of filing: 26.03.2002
(51) Int. Cl.: A63F 13/10

(54) **Command processing method**

(30) Priority: 02.05.2001 JP 2001135534; 07.02.2002 JP 2002031258
(71) Applicant: Sony Computer Entertainment Inc., Tokyo 107-0052 (JP)
(72) Inventor: Kaminagayoshi, Takehiro, Sony Computer Ent., Inc., Minato-ku, Tokyo 107-0052 (JP)
(74) Representative: Turner, James Arthur

(57) **Abstract**

A first command input is accepted within a first time. A second command input is accepted within a second time, which is different from the first time. Furthermore, contents of the first command are displayed within the second time. Then, those first and second commands are executed after inputs are accepted in the first and second time. Accordingly, for example, when applied to a video game such that desired actions can be generated in conformity with command input, that video game provides tension for the player as well as provides moderate difficulty; moreover, is a game allowing for strategic command input by the player.

## Description

### 1.Field of the Invention

The present invention relates to a command processing method, which is suitable for video games and the like, for example; recording media recorded with a command processing program; a command processing apparatus; and a command processing program.

In recent years, video game machines, for example, have become widely popularized. The video game machine is capable of executing game application programs (hereafter notated as game program), which are acquired via various recording media such as CD-ROMs and DVD-ROMs or various transmission media such as communication lines and the like. Accordingly, users (players) can enjoy various games. There are various types of the video game described above, and as examples, there are roll-playing games, adventure games, sports games, fighting battle games, puzzle games, dance games, music games and the like.

As an executing method of these various video games, a method is known that allows for desired actions to be generated in the game when, for example, a user (game player, hereafter simply referred to as player) operates in a fixed order specific buttons and levers and such, which are provided upon a game controller. It is noted that desired actions means making characters move within the game. This game executing method is a method that is realized by the players inputting instructions (commands) for moving and such of the characters in the game by operating the specific buttons and the like. The input of commands, which are executed by this game executing method, will hereafter simply be referred to as command input.

Incidentally, it is the mainstream for command input to be performed in real time according to the progression of the game. Accordingly, in order to generate desired actions upon the progression of the game, the players must perform the operation of inputting commands in real time according to the progression of the game.

However, this game is a game bringing tension to the player, wherewith the level of operating difficulty becomes high. Furthermore, in the case of this game, since the players must perform command input in real time, there is hardly any time to consider what kind of commands to be input, and as a result, performing strategic command input is extremely difficult.

Furthermore, conventional video games are those that display upon a screen the commands to be input by the player or the input timing of those commands. In the case of a video game that performs displaying of the input timing commands, the input timing is shown as the timing of when, for example, a predetermined object passes a certain line during the time when that object is scrolled upon the screen. In other words, at the time the predetermined object that is scrolled upon the screen passes a certain line, the player performs command inputting by performing the pushing operation of a predetermined button or the commanding operation of a predetermined direction. Then, when the pushing operation of the predetermined button or the commanding operation of the predetermined direction is appropriately performed by the player, the game program proceeds with the game from that point on in an advantageous course. On the other hand, in the case of a video game that displays optional commands to be input by the player, those to-be-input optional commands are displayed in order upon the screen in the appearance of an object that shows, for example, the button used for an inputting operation or the input direction. When an appropriate operation is performed by the player with the object representing the button or input direction, the game program proceeds with the game from that point on in an advantageous course.

Moreover, there are cases where the commands to be input by the player or the input timing of those commands are not displayed upon the screen whatsoever.

However, the difficulty of video game that does not display upon the screen to-be-input commands or input timing is extremely high; accordingly, for example, it is a difficult game for beginners and young children.

On the other hand, the video game that does display upon the screen to-be-input commands or input timing is a game that may be easily enjoyed since the player may input commands according to the display upon the screen. However, with this game, since there is a necessity to maintain tension to some degree, and only command input according to the display upon the screen needs to be performed, it is impossible to input a strategic command according to the player's ideas, for example.

Various respective aspects and features of the invention are defined in the appended claims. Features from the dependent claims may be combined with features of the independent claims as appropriate and not merely as explicitly set out in the claims.

The present invention takes such problems into consideration, and aims to provide a command processing method; recording media that is recorded with a command processing program; a command processing apparatus; and a command processing program, when applied to a video game such that desired actions can be generated in conformity with command input, provides tension for the player as well as realizes a game of moderate difficulty; moreover, allows for strategic command input by the player.

Embodiments of the present invention accept at least one first command input within a first time period; displays within a second time period the first command input within the first time period as well as accepting at least one second command input. The present invention executes the first command and the second command, which correspond to each other, after the first and the second command input are accepted.

Namely, embodiments of the present invention accept input of the first command and second command separately. Then, the second command is allowed to be input in the state where the already input first command is displayed. Furthermore, the first and second commands are executed after their acceptance time is over.

Embodiments of the present invention have separately the input acceptance time and the command execution time for a first command and second command, and allows for input of the second command while referencing the already input first command. As a result, when inputting the first command and when inputting the second, the user may consider what kind of command is appropriate for those to be input commands.

Accordingly, for example, when embodiments of the present invention are applied to a video game such that desired actions can be generated in conformity with command input, the game player must input commands within a fixed time period. Thus, this video game can provide a certain amount of tension to the game player. Furthermore, the game player must input the next command while referencing the already input commands. As a result, this video game is one providing moderate difficulty. Moreover, since the game player can consider what kind of commands to input, strategically progressing the game is possible.

According to the embodiments of the present invention, processing is executed based on a command group set by a computer and a command group accordingly set by a user. Noted here that the command group set by a computer forms a first command sequence comprised of n computer-set commands which are respectively assigned with number from 1 to n in order. On the other hand, the command group accordingly set by a user forms a second command sequence comprised of n user-input commands which are input by the user within a predetermined input allowable time and arranged in an input order. Furthermore, the first command sequence is displayed during a predetermined display allowable time and can be referred by the user during inputting the second command sequence. In the present invention, comparison is made between each computer-set command of the first command sequence and each user-input command of the second command sequence for number (1-n) assigned to each command, and a predetermined processing is executed based on this comparison result. It is noted here that n is a positive integer that is 2 or larger.

The invention will now be described by way of example with reference to the accompanying drawings, throughout which like parts are referred to by like references, and in which:

FIG. 1 is a diagram showing a displaying example of a confrontation scene.

FIG. 2 is a diagram showing a displaying example of a continuous hits scene.

FIG. 3 is a diagram showing a displaying example of an attack commencement scene.

FIG. 4 is a diagram showing a displaying example of an attack command input scene.

FIG. 5 is a diagram showing a displaying example of a defense commencement scene.

FIG. 6 is a diagram showing a displaying example of a defense command input scene.

FIG. 7 is a diagram showing a displaying example of an action commencement scene.

FIG. 8 is a diagram showing a displaying example of an action scene.

FIG. 9 is a diagram showing a displaying example of an offense/defense switching scene.

FIG. 10 is a diagram showing a displaying example of a deathblow activation scene.

FIG. 11 is a diagram showing a displaying example of a deathblow success scene.

FIG. 12 is a diagram showing a displaying example of a deathblow failure scene.

FIG. 13 is a diagram showing a displaying example of a victory/defeat determination scene.

FIG. 14 is a diagram showing a displaying example of a fighting card.

FIG. 15 is a diagram showing a displaying example of a fighting card and continuous hits objects and the like in a continuous hits scene.

FIG. 16 is a diagram showing a displaying example of a default object for battle system display in the case where the hero character becomes the attacking side.

FIG. 17 is a diagram showing a displaying example of an object for battle system display during attack command input in the case where the hero character becomes the attacking side.

FIG. 18 is a diagram showing an enlarged command block section during attack command input in the case where the hero character becomes the attacking side.

FIG. 19 is a diagram showing an example of attack command input in the case where the hero character becomes the attacking side.

FIG. 20 is a diagram showing a displaying example of an object for battle system display during defense command input in the case where the enemy character becomes the defending side.

FIG. 21 is a diagram showing an enlarged command block section during defense command input in the case where the enemy character becomes the defending side.

FIG. 22 is a diagram showing an example of defense command input in the case where the enemy character becomes the defending side.

FIG. 23 is a diagram showing a displaying example of an object for battle system display during action scene execution in the case where the hero character becomes the attacking side and the enemy character becomes the defending side.

FIG. 24 is a diagram showing an enlarged command block section during action scene execution in the case where the hero character becomes the attacking side and the enemy character becomes the defending side.

FIG. 25 is a diagram used in the description of the relationship between the attack commands and the defense commands.

FIG. 26 is a diagram used in the description of the variation of hit points according to the action scene execution in the case where the hero character becomes the attacking side and the enemy character becomes the defending side.

FIG. 27 is a diagram showing a displaying example of an object for battle system display during attack command input in the case where the enemy character becomes the attacking side.

FIG. 28 is a diagram showing a displaying example of an object for battle system display during defense command input in the case where the hero character becomes the defending side.

FIG. 29 is a diagram showing a displaying example of an object for battle system display during action scene execution in the case where the hero character becomes the defending side and the enemy character becomes the attacking side.

FIG. 30 is a diagram used in the description of combination attack patterns.

FIG. 31 is a diagram showing a displaying example of a combination attack pattern comprised of two "PUNCHes" and the combination attack frame thereof.

FIG. 32 is a diagram showing a displaying example of a combination attack pattern comprised of a "PUNCH" and "KICK" and the combination attack frame thereof.

FIG. 33 is a diagram showing a displaying example of a combination attack pattern comprised of two "KICKS" and the combination attack frame thereof.

FIG. 34 is a diagram showing a displaying example of a combination attack pattern comprised of three "PUNCHes" and the combination attack frame thereof.

FIG. 35 is a diagram showing a displaying example of a combination attack pattern comprised of two "PUNCHes" and one "KICK" and the combination attack frame thereof.

FIG. 36 is a diagram showing a displaying example of a combination attack pattern comprised of one "PUNCH" and two "KICKS" and the combination attack frame thereof.

FIG. 37 is a diagram showing a displaying example of a combination attack pattern comprised of three "KICKs" and the combination attack frame thereof.

FIG. 38 is a diagram showing an example of attack command input in the case of the combination attacks.

FIG. 39 is a diagram showing an example of a command block display corresponding to each combination attack pattern of FIG. 31 and FIG. 32.

FIG. 40 is a diagram showing an example of a command block display corresponding to the combination attack pattern in FIG. 33.

FIG. 41 is a diagram showing an example of a command block display corresponding to each combination attack pattern of FIG. 34 through FIG. 36.

FIG. 42 is a diagram showing an example of a command block display corresponding to the combination attack pattern of FIG. 37.

FIG. 43 is a diagram used in the description of a defense command input in the case where a combination attack command is input.

FIG. 44 is a diagram used in the description of an example of deathblow activation when the hero character is the defending side.

FIG. 45 is a diagram used in the description of a displaying example of upon a button object when the hero character is the defending side.

FIG. 46 is a diagram used in the description of an example of deathblow activation when the enemy character is the defending side.

FIG. 47 is a diagram used in the description of a deathblow-avoiding mini-game, which is performed by the hero character side when the hero character is the attacking side and when the enemy character side activates the deathblow.

FIG. 48 is a diagram used in the description of an example wherein the audience rating is increased by 4% according to the battle process flow.

FIG. 49 is a diagram used in the description of an example wherein the audience rating is increased by 3% according to the battle process flow.

FIG. 50 is a diagram used in the description of an example wherein the audience rating is increased by 2% according to the battle process flow.

FIG. 51 is a diagram used in the description of an example wherein the audience rating is increased by 1% according to the battle process flow.

FIG. 52 is a diagram used in the description of an example wherein the audience rating is reduced by 1% according to the battle process flow.

FIG. 53 is a diagram used in the description of an example wherein the audience rating is reduced by 2% according to the battle process flow.

FIG. 54 is a diagram used in the description of the data structure in the game program.

FIG. 55 is a flowchart showing the main process flow of the game program.

FIG. 56 is a diagram showing an example of the schematic configuration of the main sections of the video game system.

FIG. 57 is a block diagram showing the internal schematic configuration of the video game machine.

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

The video game of this embodiment is one such that the desired actions are generated according to command input. This embodiment gives as an example a game that includes scenes in which characters in the game are moved, for example, to perform a battle with the opposing characters when a player controls buttons and levers provided upon a game controller in a game proceeding in the manner of a television program.

While details will be described later, this video game includes an attacking side and defending side during battle to perform a predetermined number of attacks and defenses thereto; offense/defense switching is performed when there are remaining game points (for example, hit points described later), and then the outcome of the battle is determined when there are no remaining game points. Furthermore, commands to be input in this video game are divided into attack commands to be input by the attacking side before actual battle is performed, and defense commands to be similarly input by the defending side before the actual battle is performed. The inputs of these attack commands and defense commands are not performed simultaneously before battle, but are performed separately. It is noted that the input of these commands includes the case where the input is made by a player, and also the case where a game program sets the commands. Then, this video game starts execution of the actual battle according to those attack commands and defense commands after inputs thereof. In other words, inputs of commands to instruct attacking and defending to be activated during actual battle are not performed in real time in conformity to progression of the game, but input before the actual battle is performed, thus there is time difference between command input and the actual battle. Furthermore, in this video game, for example, the attack commands are input first, and afterwards, the defense commands are input referencing the attack commands that have already been input. Thus, the player may consider what commands to be input when inputting the attack commands and defense commands, and as a result, strategic command input may be performed.

It is noted that hereafter a character controlled by a player is called a hero (Defender of Justice) character, and an opponent character is called an enemy character. It is noted that the enemy character may be a character controlled by another player, or a character moving according to the game program (a character whose actions are mainly controlled by the game program) . Furthermore, a player may control the enemy character, and the game program or another player may control the hero character . Hereafter, a case where the hero character is controlled by the player and the enemy character is controlled by the game program is given as an example.

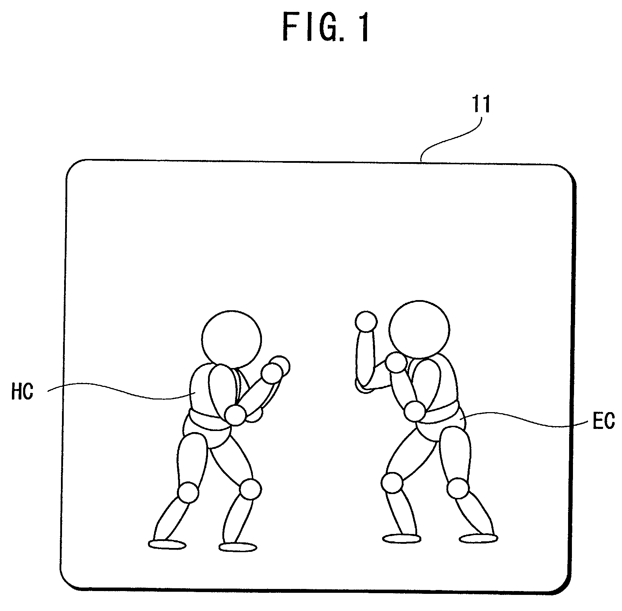

To begin with, the flow of a schematic game when performing a battle with the hero character and the enemy character will be described sequentially using the examples of displaying upon game screen 11 as shown in FIG. 1 to FIG. 13. Afterwards, objects other than characters to be displayed on game screen 11, the actual command inputs, and displaying method thereof will be described.

### Confrontation Scene

In the case where the hero character and the enemy character begin a battle, to begin with, the game program displays a scene in which the hero character HC and the enemy character EC confront each other upon game screen 11 as shown in FIG. 1. The hero character HC and the enemy character EC at this time are displayed in "ready" status before attacking or defending, respectively.

Furthermore, at the time of this confrontation scene, the game program displays upon game screen 11 an image when a virtual camera (a virtual camera virtually photographing the game screen) goes around the hero character HC and the enemy character EC once. Accordingly, the pre-battle atmosphere is intensified.

The confrontation scene where the hero character HC, for example, fights with a plurality of enemy characters EC is similar to the case as described above.

It is noted that the game program displays objects and the like for displaying a fighting card described later upon game screen 11 in the confrontation scene although omitted from FIG. 1.

### Repeated Hit Scene

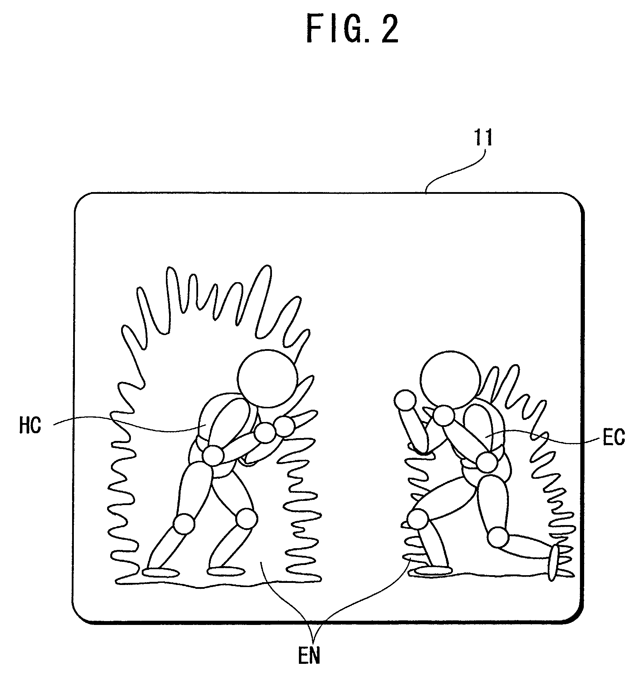

After the confrontation scene, the game program displays a continuous hits scene upon game screen 11 for a continuous hits mini-game to determine whether the hero character HC or the enemy character EC is to be the first attacking side, as shown in FIG. 2.

Here, first attacking indicates that the attack commands described later can be input first. The continuous hits mini-game is, for example, a short game to determine the first attacking side by measuring how many times the predetermined buttons provided upon the game controller are pushed per unit of time (for example, 1 second), namely, the number of continuous hits (or continuous hits speed). For example, in the case where the number of continuous hits per unit of time of the hero character HC side (player side) and that of the enemy character EC side are the same, those numbers of continuous hits are balanced one-to-one; thus the continuous hits mini-game is performed again.

Furthermore, in the continuous hits scene, the game program visually displays the amount of continuous hits by the size of energy EN spurting like flames from the bodies of the hero character HC and enemy character EC. Accordingly, the player may easily know which of the hero character HC or the enemy character EC has more continuous hits.

Moreover, the game program changes the allowable number of continuous hits per unit time according to the fighting capability of the enemy character EC that is an opponent to the hero character HC. As an example, the game program specifies the allowable number of continuous hits of an enemy character EC with low fighting capability to be four times per second, for example, or to be six to sixteen times per second for an enemy character EC with high fighting capability, for example. It is noted that the number of continuous hits of predetermined buttons by the enemy character EC is that predetermined by the game program in the case where the actions of the enemy character EC is controlled by the game program. That is, the number of continuous hits by the enemy character EC is, for example, a number determined according to the game level that is selected by the player with, for example, the game initial menu and the like, from a plurality of pre-provided numbers of continuous hits according to the level of the game (difficulty), for example.

It is noted that although omitted from FIG. 2, the game program displays objects and the like for displaying continuous hits described later upon game screen 11 in the continuous hits scene.

### Attack Commence Scene

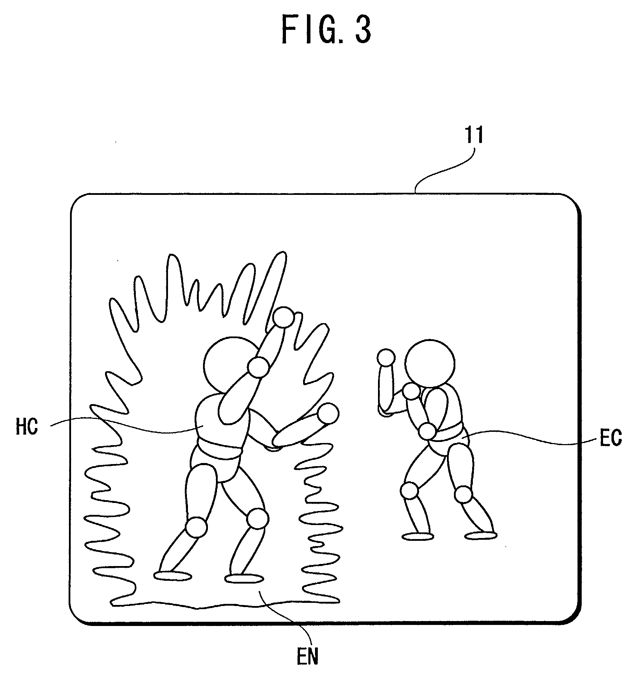

After the first attacker/second attacker determination phase comprised of the confrontation scene and the continuous hits scene, the game shifts to a command offense/defense phase. When shifting to this command offense/defense phase, the game program displays upon game screen 11 the attack commencement scene as shown in FIG. 3. In this attack commencement scene, the character to become the attacking side (hero character HC in the example of FIG. 3) is positioned upon the screen in the front of the player side (namely, for example, the position showing his back) and left of the defending side. On the other hand, the character to become the defending side (enemy character EC in the example of FIG. 3) is displayed such that it is positioned in the back right side of the screen confronting the attacking side character (hero character HC).

Furthermore, in the attack commencement scene, the game program displays the state of energy EN spurting like flames from the body of the attacking side character (hero character HC in this case) upon game screen 11.

It is noted that the game program also displays each object, although they are omitted in FIG. 3 and FIG 4 through FIG. 10 described later, for displaying the normal battle system described later upon each game screen 11 from the attack commencement scene onward.

### Attack Command Input Scene

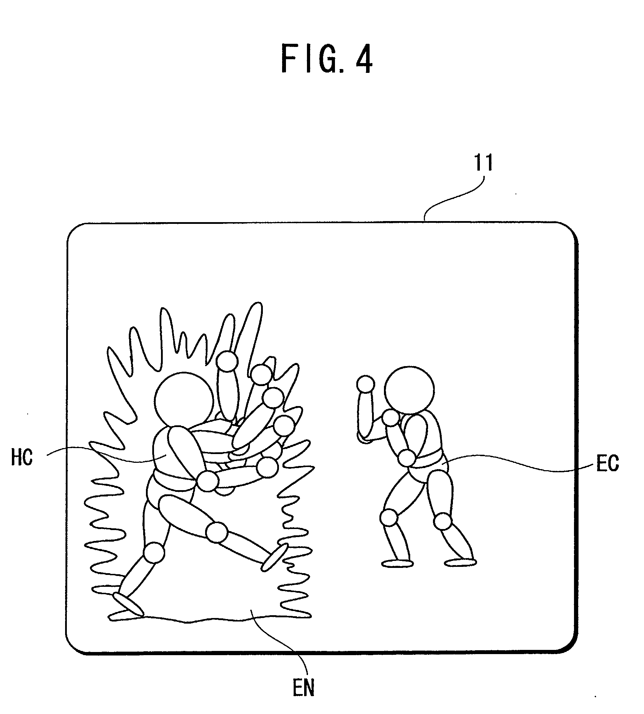

After the attack commencement scene, the display upon game screen 11 proceeds to the attack command input scene, as shown in FIG. 4, for inputting the attack commands described later from the first attacking side, which is determined at the previous continuous hits scene. In the attack command input scene, the game program, for example, displays upon game screen 11 a moving image of the attacking side character according to the command inputs from the attacking side. Needless to say, the attacking side character may act not only according to the input attack commands, but may also take actions, such as completely unrelated actions and the like, so that the contents of the input attack commands are unnoticed by the defending side. Thus, in the case where actions of the attacking side character are in conformity with the input attack commands, the player who is the defending side can refer to those attack commands when inputting the defense commands afterwards. Accordingly, the difficulty of the game decreases in this case. On the other hand, in the case where actions of the attacking side character have no relationship to the input attack commands, the player who is the defending side cannot refer to those attack commands when inputting the defense commands afterwards. Accordingly, the difficulty of the game increases in this case. It is noted that the attack commands are set by the game program when the game program controls the first attacking side character. In addition, the game program also displays the actions of the attacking side character in the attack command input scene as a blurry subject with motion blurring processing.

Furthermore, in this attack command input scene, the game program displays upon game screen 11 the state of energy EN spurting like flames from the body of the attacking side character (hero character HC in this case) . On the other hand, the defending side character (enemy character EC in this case) in this attack command input scene is displayed in a position of guarding the attacks.

### Defense Commence Scene

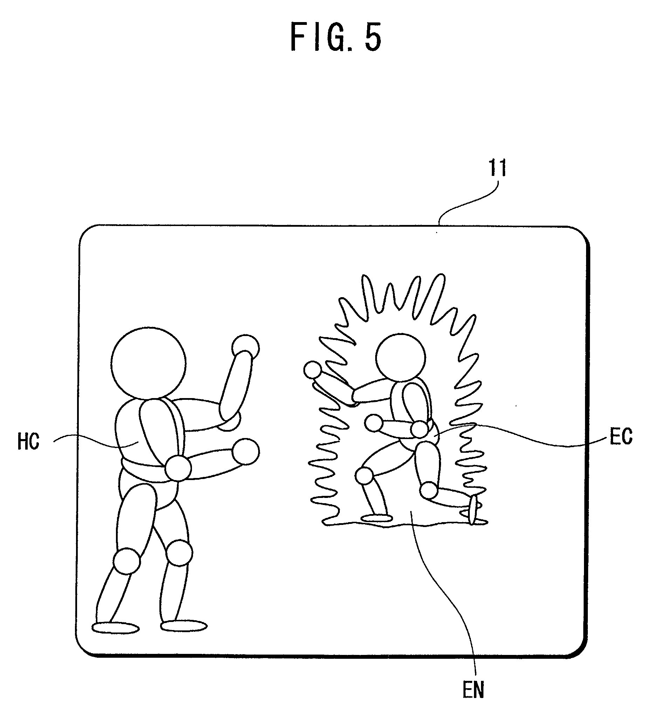

After the attack command input scene, the game program displays the defense commencement scene upon game screen 11, as shown in FIG. 5. In this defense commencement scene, a character to be the defending side (enemy character EC in the example of FIG. 5) is displayed in "ready" status before attacking or defending positioned at the back right side of the screen.

Furthermore, in the defense commencement scene, the game program displays upon game screen 11 the status of energy EN spurting like flames from the body of the defending side character (enemy character EC in this case).

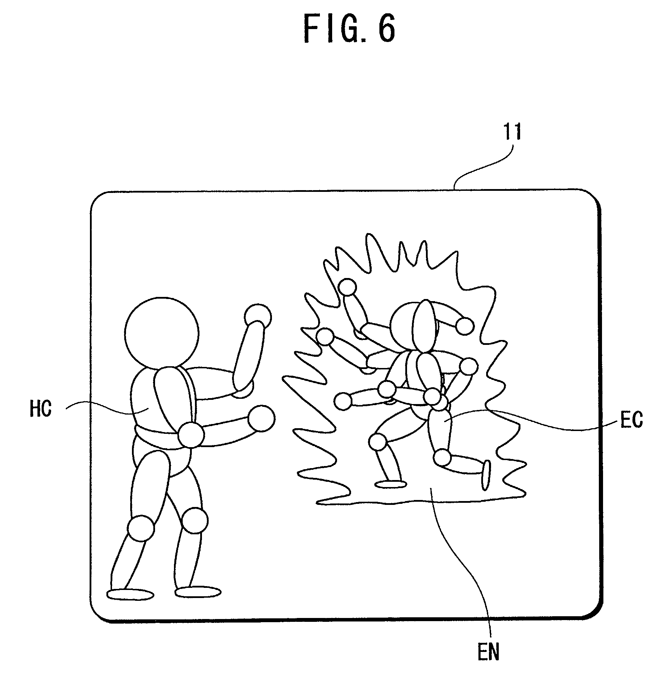

After the defense commencement scene, the game program shifts the display upon game screen 11 to the defense command input scene, as shown in FIG. 6, for inputting the defense commands described later by the defending side. In the defense command input scene, the game program displays upon game screen 11 a moving image of the defending side character according to the defending side input. Needless to say, the actions of the defending side character may not only correspond with the input defense commands, but he may also take actions, such as completely unrelated actions and the like, so that the contents of the input defense commands are unnoticed by the attacking side (the player in this case) . It is noted that the defense commands are set by the game program when the game program controls the defending side character. The game program applies motion blurring processing to the actions of the defending side character in the defense command input scene.

Furthermore, in this defense command input scene, the game program displays upon game screen 11 the state of energy EN spurting like flames from the body of the defending side character (enemy character EC in this case). On the other hand, the attacking side character (hero character HC in this case) is displayed in "ready" status before attacking in this defense command input scene.

### Action Commence Scene

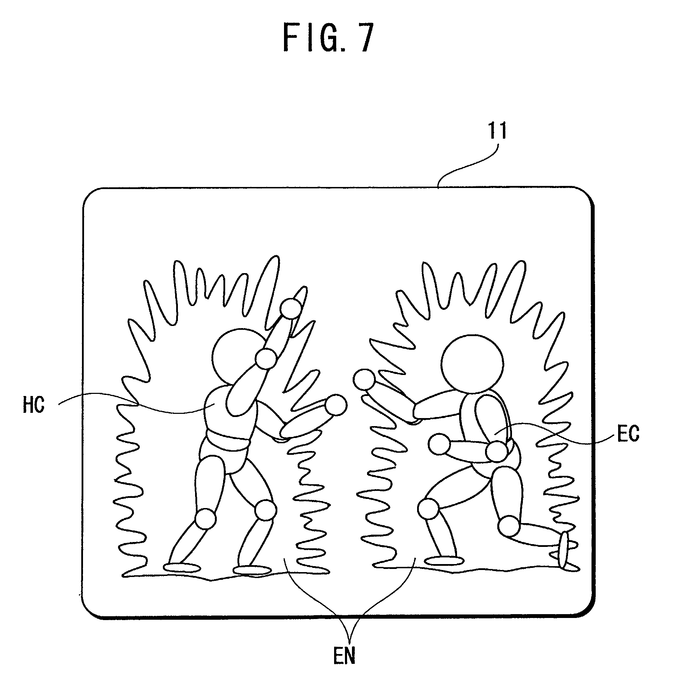

After the command offense/defense phase from the attack commencement scene through the defense command input scene, the game program shifts into the processing of the action scene phase. When shifting into this action scene phase, the game program displays upon game screen 11 the action commencement scene, as shown in FIG. 7. The action commencement scene is a scene before the hero character HC and the enemy character EC actually begin a battle (begin actions), and side view image of those characters HC and EC taken by the virtual camera is displayed upon game screen 11.

Furthermore, in the action commencement scene, the game program displays upon game screen 11 the state of energy EN spurting like flames from the bodies of the characters of both the attacking side and defending side.

### Action Scene

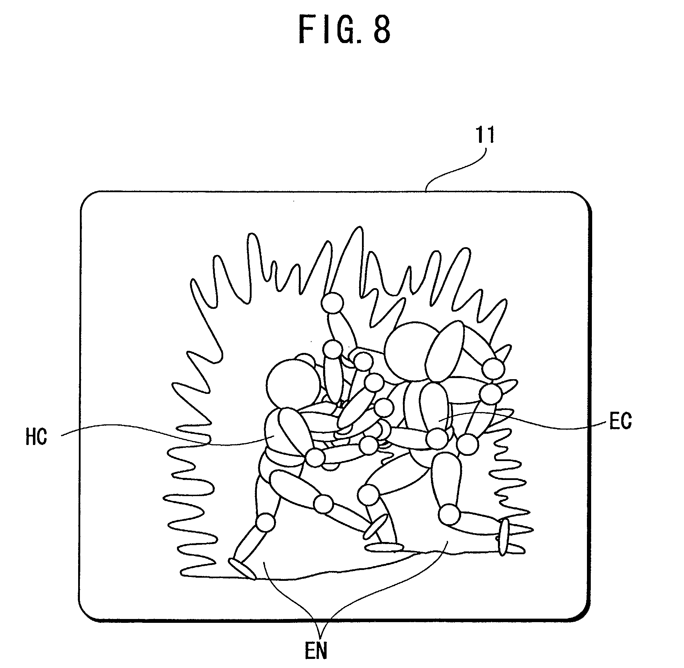

After the action commencement scene, the game program displays the action scene wherein both characters actually perform a battle upon game screen 11, as shown in FIG. 8. In this action scene, the attacking side character (hero character HC in this example) takes attacking action according to the attack commands input in the previous attack command input scene; whereas, the defending side character (enemy character EC in this example) takes defending action according to the defense commands input in the defense command input scene, and the state wherein the attacking side character performs a battle with the defending side character is displayed upon game screen 11.

Furthermore, in the action scene, the game program displays upon game screen 11 the state of energy EN spurting like flames from the bodies of characters on both the attacking side and defending side, applies motion-blurring processing to the action of each character, and shifts the position of the virtual camera. Accordingly, the actions in the battle can be intensely expressed.

### Offense/Defense Switch Scene

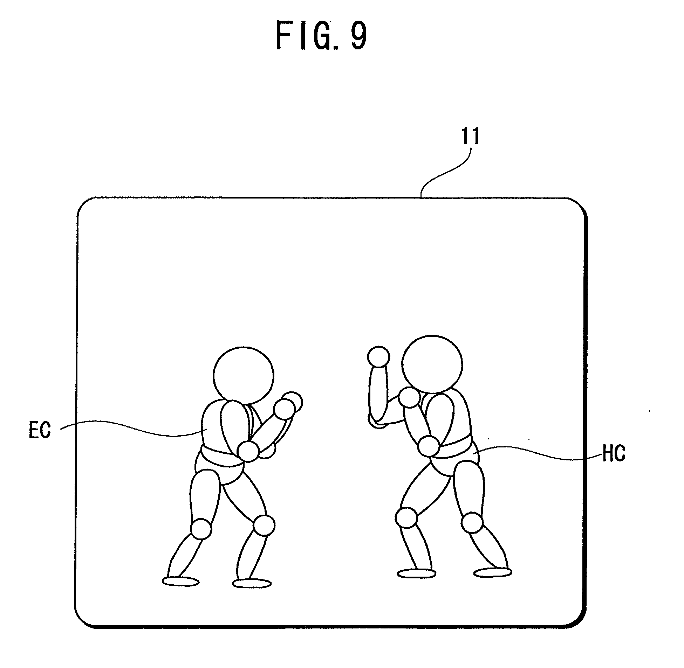

When neither a winner nor loser can be determined in the action scene, the game program shifts the display upon game screen 11 to the offense/defense switch scene, as shown in FIG. 9. This offense/defense switch scene is a scene where the battle in the action scene completes the first stage; from this point on, the attacking side switches to the defending side, and the defending side switches to the attacking side. Namely, in the case where the hero character is on the attacking side, for example, and the enemy character is on the defending side before the offense/defense switching scene, the hero character becomes the defending side, and the enemy character becomes the attacking side from the offense/defense switch scene onward.

At this time, the game program enters the "ready" status, which is before both characters attack or defend, and displays upon game screen 11 a side view image of those characters taken by the virtual camera.

After the offense/defense switch scene, the game program repeats each scene from the attack commencement scene through the action scene and the offense/defense switch scene until both winner and loser are determined.

### Deathblow Activation Scene

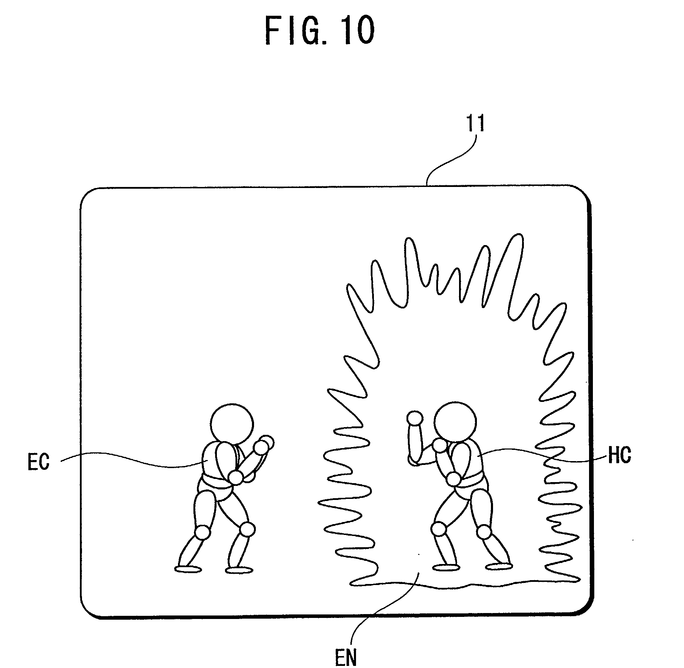

Furthermore, this video game is configured such that a character on the defending side can begin to activate a deathblow during the battle, as shown in FIG. 10 through FIG. 12. Although the details are described later, the deathblow, for example, can be activated only when the game points (hit points) of the defending side are less than the predetermined number. At this time, the attacking side must execute the mini-game for avoiding deathblows activated from the defending side (deathblow avoiding mini-game as described later).

In the case where the deathblow is activated, the game program, to begin with, displays upon game screen 11 the deathblow activation scene, as shown in FIG. 10. This deathblow activation scene is a scene before the deathblow is actually activated. At this time, the game program displays the "ready" status before both characters attack or defend, and displays an image of those characters taken from a virtual camera from a position further away than normal, for example.

Furthermore, in the deathblow activation scene, the game program displays upon game screen 11 the state of energy EN that is greater than normal spurting from the body of the defending side character that activates a deathblow. After the deathblow activation scene, the game program displays upon game screen 11 the state that the deathblow is actually activated from the defending side character.

### Deathblow Success Scene

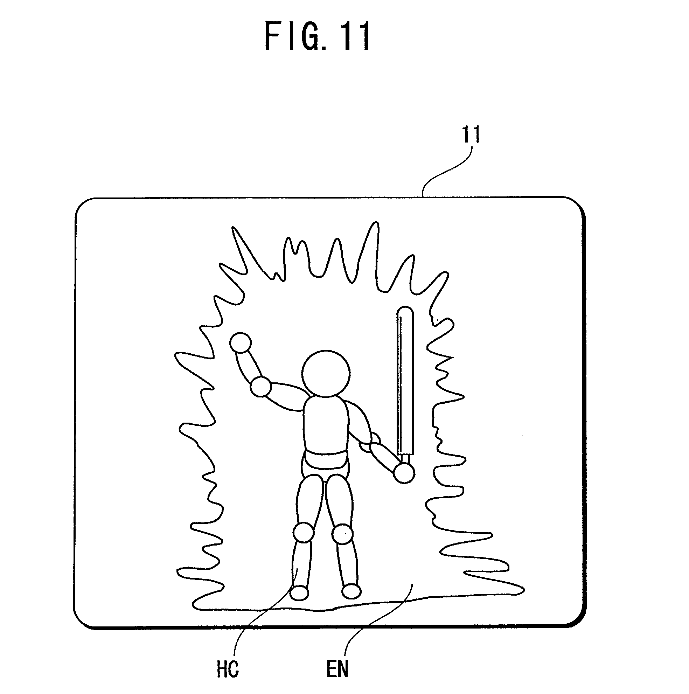

In the case where the character on the defending side actually activates a deathblow, and the attacking side character cannot avoid the deathblow, the game program displays the deathblow success scene upon game screen 11, as shown in FIG. 11. In the deathblow success scene, the game program displays upon game screen 11 the state that the character activating the deathblow acts to express the success of the deathblow and the state of the energy EN spurting like flames from the bodies of the character.

### Deathblow Failure Scene

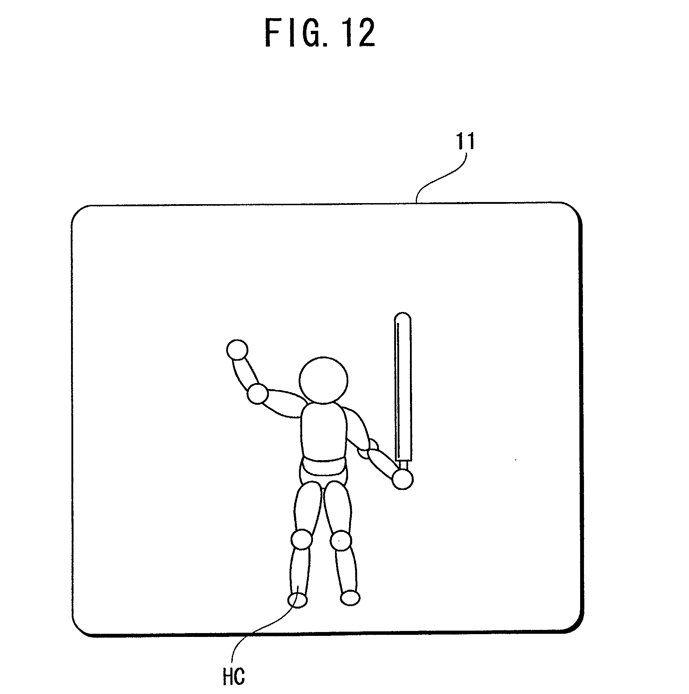

On the other hand, in the case where the attacking side character can avoid the deathblow activated from the defending side character, the game program displays the deathblow failure scene upon game screen 11, as shown in FIG. 12. In the deathblow failure scene, the character activating the deathblow (the defending side character) acts to express the failure of the deathblow.

### Victory/Defeat Determination Scene

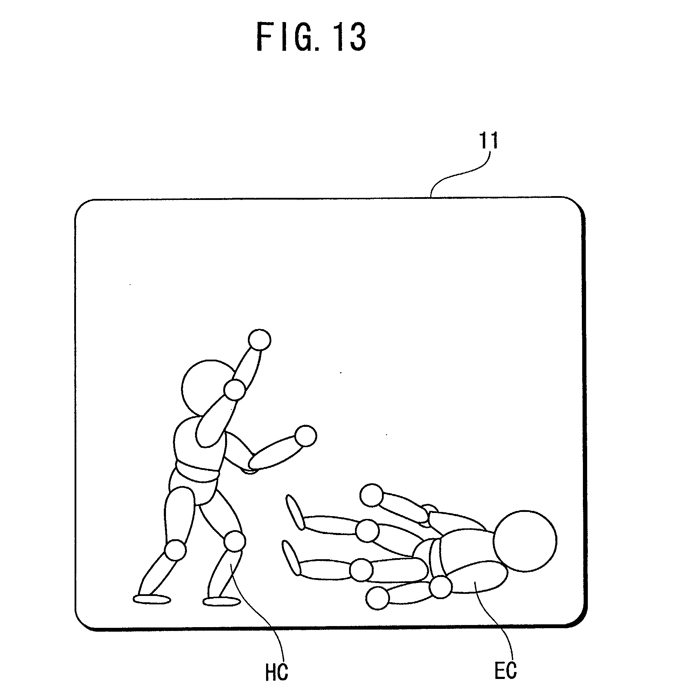

When the action scene phase comprised of the aforementioned action commencement scene through the offense/defense switch scene and the deathblow activation scene through deathblow success or failure scene is completed, the game program shifts to the termination phase process, and displays upon game screen 11 the victory/defeat determination scene, as shown in FIG. 13. It is noted that in the action scene, in the case where there are no remaining game points (hit points) of the defending side during the battle, the game program becomes the state where the defending side character is attacked one-sidedly from that point to the end of the action scene, and proceeds to the victory/defeat determination scene after the action scene is complete. This victory/defeat determination scene is a scene to be displayed in the case where the outcome is determined in the action scene, or the outcome is determined by having the activated deathblow succeed and the like, wherein the loser may fall down and the winner may pose in triumphant. It is noted that the example of FIG. 13 shows a displaying example in the case where the hero character HC is a winner.

The above is the schematic flow of the actions of the hero character HC and enemy character EC during battle upon game screen 11 of this video game. It is noted that the enemy character EC is not limited to only one, but may be a plurality of characters. When fighting with a plurality of enemy characters EC, the hero character HC may fight in order with each of the plurality of enemy characters as described above, after the first attacker/second attacker is determined in the continuous hits scene. Needless to say, when there are no remaining game points (hit points) of the hero character HC throughout the sequential fights, the battle ends.

### Details of Command Input and Displaying Method Thereof

Next, objects other than the characters displayed upon game screen 11 between the confrontation scene and the victory/defeat determination scene; the to-be-input attack commands and defense commands; and the displaying condition thereof will be described below.

### Fighting Card in Confrontation Scene

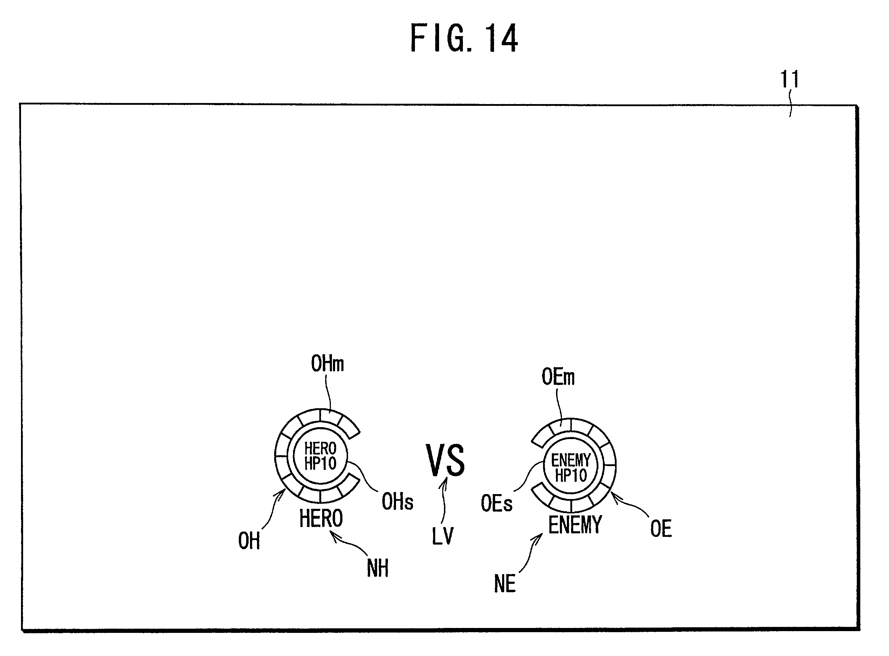

The game program displays the hero character HC and enemy character EC, in addition to objects (hereafter, notated as FC objects OH and OE) representing a fighting card as shown in FIG. 14 within game screen 11 of the confrontation scene shown in FIG. 1. It is noted that the FC objects OH and OE are actually displayed on the same screen as each of the characters HC and EC shown in FIG. 1. However, in the example of FIG. 14, each of the characters HC and EC shown in FIG 1 is omitted from the figure, and only the FC objects OH and OE are shown.

These FC objects OH and OE are those corresponding to each character HC and EC to be fighting in the battle; in the example of FIG. 14, the FC object OH corresponds to the hero character HC; and the FC object OE corresponds to the enemy character EC. The FC objects OH and OE are configured of hit point meter sections OHm and OEm, and symbol sections OHs and OEs. The hit point meter sections OHm and OEm are objects for displaying on the meter the remaining game points (hit points HP) for each hero character HC and enemy character EC. The symbol sections OHs, OEs are objects for displaying the numerical value (for example, initial physical capacity value is "10") of hit points HP for each of hero character HC and enemy character EC. It is noted that the number of points allowing for a deathblow to activate described later and the rest in the hit point meter sections OHm and OEm are visible by color, for example. These FC obj ects OH and OE are displayed, for example, below the hero character HC and the enemy character EC upon game screen 11.

Furthermore, the game program displays characters representing, for example, names of each character (characters NH for "hero" and characters NE for "enemy" in the example of FIG. 14), for example, below these FC objects OH and OE. Moreover, the game program displays between the FC objects OH and OE upon game screen 11 the characters LV of "VS", which represents that the hero character HC and enemy character EC will fight.

### Repeated Hit Display in Repeated Hit Scene

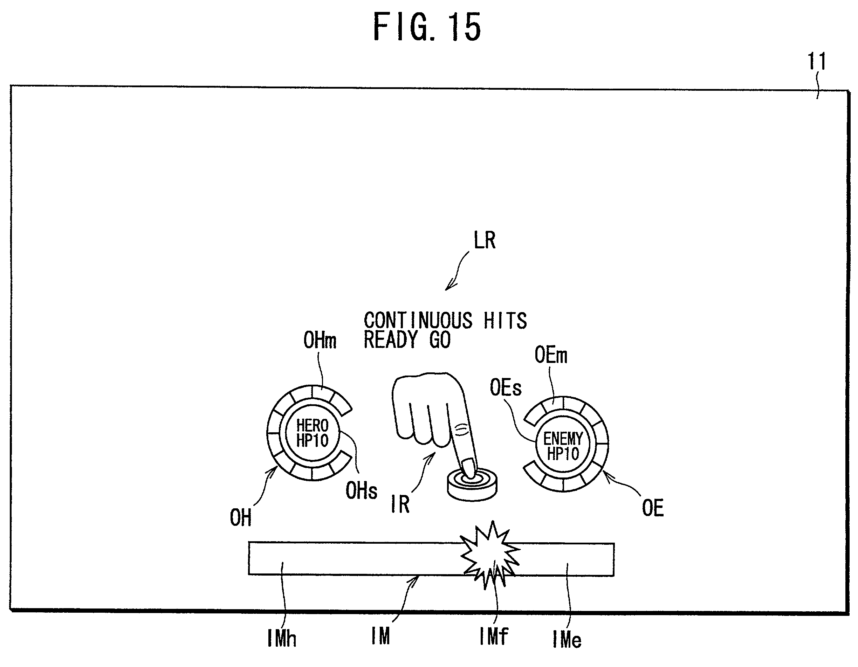

The game program displays a continuous hits object IR and a meter object IM and the like, which are for representing continuous hits display as shown in FIG. 15 in addition to the hero character HC and enemy character EC and the FC objects OH and OE within game screen 11 of the continuous hits scene shown in FIG. 2. It is noted that the game program also displays each object OH, OE, IR, and IM and the like upon the same screen as each character HC and EC for this continuous hits display, as in the case of the fighting card display. However, the example of FIG. 15 omits each character HC and EC so as to simplify the figure.

The continuous hits object IR, for example, is an icon for prompting the player to continuously hit the predetermined buttons upon the game controller, and it is, for example, displayed between the FC objects OH and OE.

The meter object IM is an object to be displayed such that the ratio of lengths of the left bar IMh and right bar IMe with the meter bar varies according to the number of continuous hits (or speed of continuous hits) of the hero character HC side and the enemy character EC side, which are performed in the continuous hits mini-game. It is noted that in the example of FIG. 15, the ratio of length of the left bar IMh relative to the right bar IMe corresponds to the number of continuous hits of the hero character HC side; whereas, the ratio of length of the right bar IMe relative to the left bar IMh corresponds to the number of continuous hits of the enemy character EC side. Furthermore, the game program provides at the boundary between the left bar IMh and right bar IMe the effects section IMf for an image such as bursting firecrackers. The effects section IMf is an object for representing the fighting state of the continuous hits mini-game.

In addition, the game program displays, for example, characters LR of "RENDER READY GO" and the like, which represent the beginning of continuous hits, for example, above the continuous hits object IR when displaying the continuous hits .

### Default Battle System Display

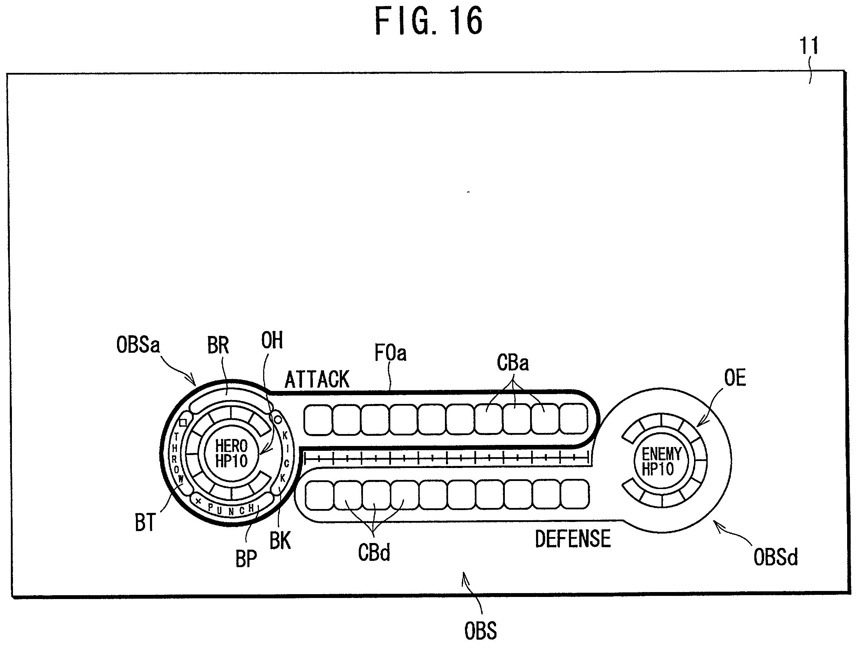

The game program displays an object for battle system display (hereafter, notated as BS object OBS) for displaying within game screen 11 of the command offense/defense phase the hero character HC and enemy character EC, for example, as shown in FIG. 16, input commands; which character is the attacking side and defending side; and the transition of the game points (hit points) and the like. It is noted that the BS object OBS shown in this FIG. 16 is a default object first displayed, for example, when the hero character HC side is determined as the first attacking side, and the enemy character EC side is determined as the defending side according to the first attacker/second attacker determination phase. When determination of the first attacker/second attacker is performed in the continuous hits scene, the game program moves the FC objects OH and OE, for example, to a specified place (specified place for the attacking side is the left side, and the right side for the defending side) according to the determined results of the first attacker/second attacker; moreover the game program displays upon game screen 11 the default BS object OBS so as to fade in towards the FC objects OH and OE.

The BS object OBS is comprised of an attack system object for the attacking side (hereafter, notated as AS object OBSa) and a defense system object for the defending side (hereafter, notated as DS object OBSd). In the case where the hero character HC is the attacking side, the AS object OBSa is comprised of elements such as the FC object OH; button objects BT, BP, BK, and BR provided surrounding thereof; and n command blocks CBa displayed in a line according to an input order (or an order set by the game program) of n attack commands. On the other hand, in the case where the enemy character EC is the defending side, the DS object OBSd is comprised of elements such as the FC object OE and n command blocks CBd displayed in a line according to an input order (or an order set by the game program) of n defense commands. Note that n is a positive integer that is 2 or larger.

Here, the button objects BT, BP, BK, and BR upon the AS object OBSa are displayed with approximately the same arrangement as the predetermined buttons provided upon the game controller. The example of FIG. 16 indicates an example of arrangements for each objects BT, BP, BK, and BR assuming that four buttons, such as "Δ", "□", "X", and "○" buttons described later upon which are formed Δ, □, X, and ○ shaped stamps are arranged upon a predetermined circumference. Namely, the button object BT is arranged corresponding to the "□" button upon the game controller; the button object BP is arranged corresponding to the "X" button upon the game controller; the button object BK is arranged corresponding to the "○" button upon the game controller; and the button object BR is arranged corresponding to the "Δ" upon the game controller. Furthermore, the button objects BT, BP, BK, and BR comprise the symbols "Δ", "□", "X", and "○", corresponding to the "Δ", "□", "X", and "○" buttons upon the game controller, respectively. Furthermore, when assuming that, for example, the attack command of "THROW" is assigned to the "□" button on the game controller; the attack command of "PUNCH" is assigned to "X" button; and the attack command of "KICK" is assigned to "○" button, the button objects BT, BP, and BK comprise characters representing the respective corresponding attack commands (for example, "THROW", "PUNCH", and "KICK", and the like described later).

It is noted that since no commands are assigned to the "Δ" button upon the game controller at this time, the button object BR does not comprise the symbol "Δ" and characters. Furthermore, in the case where there is only one player, and the hero character HC controlled by the player fights with the enemy character EC controlled by the game program, as the example of FIG. 16, the game program does not configure the button objects around the FC object OE of the DS object OBSd. However, for example, in the case where there are two players, and they control the hero character HC and enemy character EC, the game program configures around the FC object OE each button object corresponding to the defense commands as described. Needless to say, these button objects, and symbols and characters thereon are arranged in a line.

Furthermore, the object frames of the AS object OBSa and DS object OBSd that configure the BS object OBS are, for example, displayed thick and discriminately colored during command input and battle execution. For example, when input of attack commands is possible, (namely, in the attack command input scene), the object frame FOa of the AS object OBSa is, for example, displayed thick and discriminately colored. On the other hand, when input of defense commands is possible, the object frame FOd (not shown in the case of FIG. 16) of the DS object OBSd is displayed thick and discriminately colored. Moreover, when the actual battle begins, the object frames FOa and FOd (not shown in the case of FIG. 16) of both the AS object OBSa and DS object OBSd are displayed thick and discriminately colored. Accordingly, the player may know which command input is possible, and whether it is in the period for inputting commands or for battle and the like. It is noted that the brightness of the AS object OBSa and DS object OBSd may be changed during the command input and battle execution.

### Battle System Display during Attack Command Input

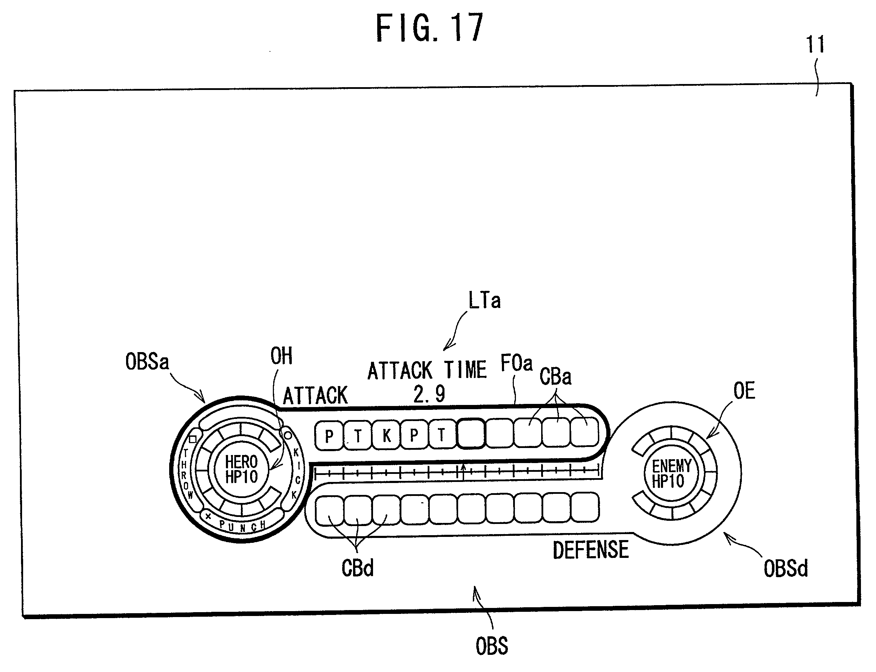

When progressing to the attack command input scene described in FIG. 4 while displaying the BS object OBS described above, as shown in FIG. 17, the game program displays upon game screen 11 characters LTa that represent the allowable time for input acceptance of attack commands (input allowable time, hereafter, referred to as attack time). Time in the characters LTa that represent the attack time is, for example, expressed by a numerical value counting down or counting up (for example, a numerical value represented to the first decimal place). In this example, the attack time for the attack command input is set as five seconds. Namely, the input acceptance time for attack commands is ended in five seconds after the beginning of the attack time.

Furthermore, the game program sets the attack commands input within the attack time to each command block CBa upon the AS object OBSa in the input order. It is noted that, for example, in the case where there are two players, and they control the hero character HC and enemy character EC, the game program does not display upon game screen 11 the attack commands being input so as to prevent the opponent side from seeing thereof.

### Details of Attack Command Input

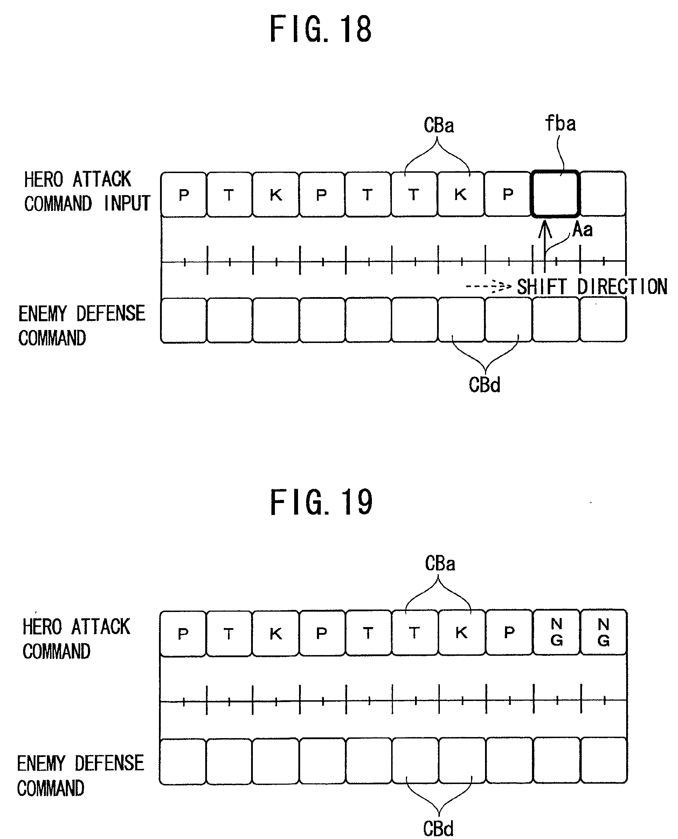

Hereafter, the attack commands to be set to each command block CBa will be described using FIG. 18 and FIG. 19, wherein only the parts of command block CBa and CBd are enlarged.

In the case of this video game, the three types of attack commands of "THROW (T)", "PUNCH (P)", and "KICK (K)" are provided as an example, wherewith, for example, ten attack commands may be input within the attack time. Furthermore, this video game also provides "NO GUARD (NG)" when there are no attack commands input. It is noted that NO GUARD during the attack command input indicates a state where no attacking of any kind is performed.

The game program displays attack time line Aa and 1-n command input allowable frames (hereafter, simply notated as input allowable frame fba) upon game screen 11 during the attack time, as shown in Fig. 18. The attack time line Aa shifts to the right along with the passage of time. The input allowable frame fba is an object that is instructed by the attack time line Aa and that represents the command block Cba with which attack command input is possible, and is color-coded, for example. The shift speed of the attack time line Aa varies according to the difficulty (for example, strength of the opponent and the like) of the game. When the difficulty is high, the shift speed becomes faster, or adversely, when the difficulty is low, the shift speed becomes slower. The game program sets the commands respectively input to each command block CBa that the attack time line Aa has passed by. In the example of Fig. 18, "THROW" is represented by "T", "PUNCH" is represented by "P", and "KICK" is represented by "K" as the attack commands set to each command block CBa. It is noted that the game program sets the "NO GUARD (NG)" to the command block CBa to which the desired attack commands are not input when the attack command input is allowed according to the attack time line Aa and the input allowable frame fba. Furthermore, the game program sets the "NO GUARD" to the command block CBa to which the attack commands are not input within the attack time. It is noted again that the attack time line Aa may not be displayed, and that display on each command block CBa may symbols of "Δ", "□", "X", and "○" corresponding to the input attack commands.

### Battle System Display during Defense Command Input

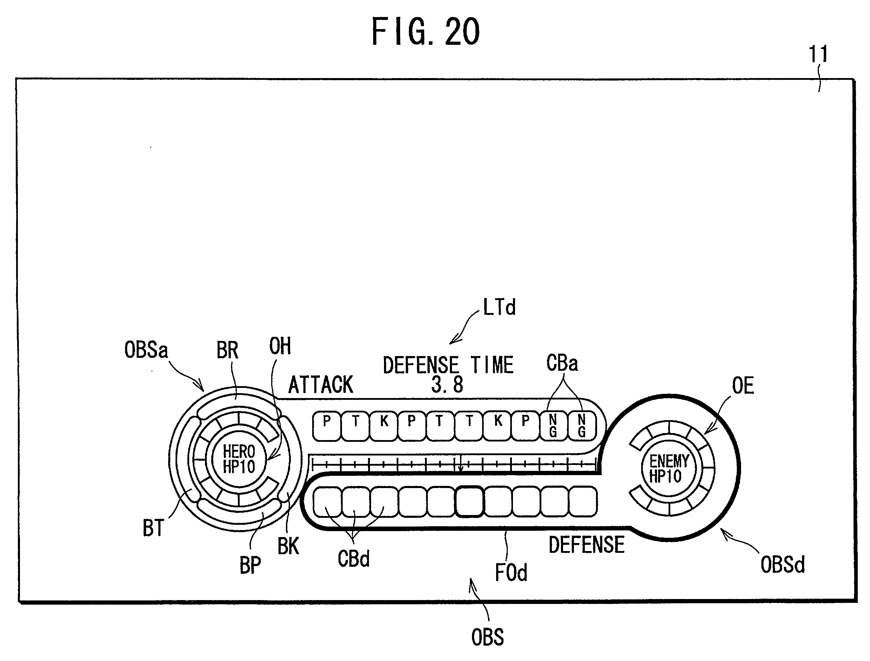

Next, in the case where the attack commands are input, each attack command as shown in Fig. 19, for example, is set to each command block CBa, and the attack time ends, as described above, the game program proceeds to the processing of the defense command input scene of Fig. 6 through the defense commencement scene of Fig. 5. When proceeding to the defense command input scene, the game program changes the BS object OBS upon game screen 11 to be that at the time of defense command input shown in Fig. 20.

More specifically, for the BS object OBS of the defense command input scene, the object frame FOd of the DS object OBSd is displayed thick and discriminately colored; whereas, the object frame of the AS obj ect OBS a disappears. Furthermore, the game program during defense command input erases the symbols ("□", "×", and "○") and characters ("THROW", "PUNCH", and "KICK") displayed on the button objects BT, BP, BK and BR of the AS object OBSa during attack command input. Accordingly, the player may know that input of any attack commands is not accepted.

Furthermore, in the defense command input scene, the game program displays upon game screen 11 the characters LTd representing the allowable time for input acceptance of the defense commands (input allowable time, hereafter, notated as defense time). Time in the characters LTd representing the defense time is, for example, expressed by a numerical value counting up or counting down (for example, a numerical value represented to the first decimal place) . In this example, the defense time for the defense command input is set as five seconds. Namely, the input allowable time for defense commands is ended in five seconds after the beginning of the defense time.

Furthermore, the game program sets the defense commands input within the defense time to each command block CBd upon the DS object OBSd in the input order. It is noted that, as this example, in the case where a player is controlling the hero character HC, the game program does not display upon game screen 11 the already input defense commands so as to prevent the player from seeing the defense commands input by the enemy character EC side, as example in Fig. 20.

### Details of Defense Command Input

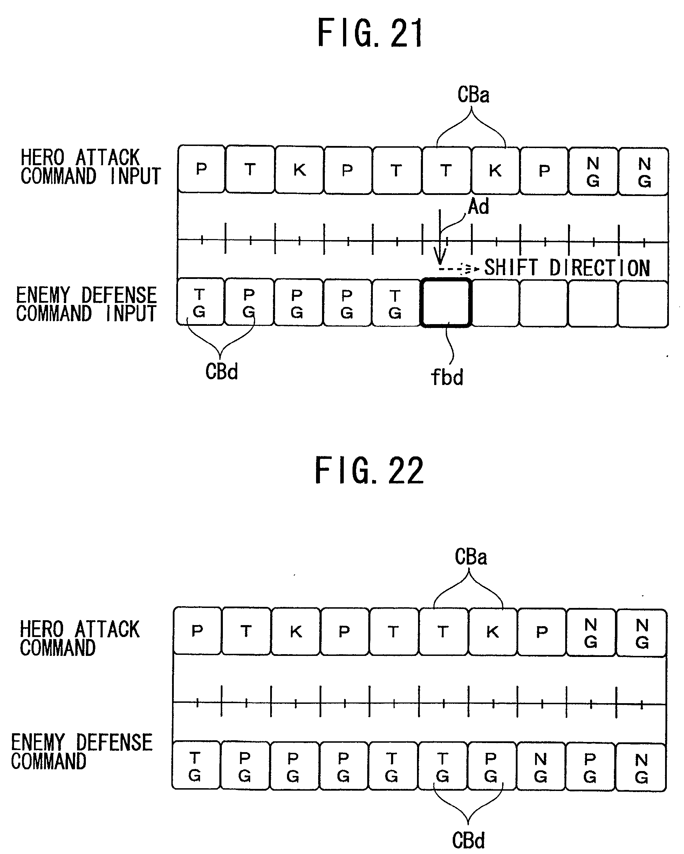

Hereafter, the defense commands to be set to each command block CBd are described using FIG. 21 and FIG. 22, wherein only the parts of command block CBa and CBd in the AS object OBSa and DS object OBSd are enlarged.

In the case of this video game, the three types of defense commands, such as "THROW GUARD (TG)", "PUNCH GUARD (PG)", and "KICK GUARD (KG)" are provided. Ten defense commands corresponding to the number of input attack commands can be input within the defense time. Furthermore, this video game provides "NO GUARD (NG)" in the case where defense commands are not input. It is noted that NO GUARD during the defense command input indicates a state where NO GUARD is performed against the attacks.

The game program displays upon game screen 11 a defense time line Ad and a command input frame (hereafter, simply notated as input frame fbd) during the defense time, as shown in Fig. 21. The defense time line Ad shifts to the right along with the passage of time. The input frame fbd is an object that is instructed by the defense time line Ad and that represents the command block CBd to which defense commands are input, and is color-coded, for example. The shift speed of the defense time line Ad varies according to the difficulty (for example, strength of the opponent and the like) of the game. When the difficulty is high, the shift speed becomes faster, or adversely, when the difficulty is low, the shift speed becomes slower. The game program sets the commands that have respectively been input to each command block CBd that the defense time line Ad has passed by. In the example of Fig. 21, "THROW GUARD" is represented by "TG" and "PUNCH GUARD" is represented by "PG" as the defense commands set to each command block CBd. It is noted that the game program sets the "NO GUARD (NG)" to the command block CBd to which the defense commands are not input when the defense command input is allowed according to the defense time line Ad and the input frame fbd. Furthermore, the game program sets the "NO GUARD" to the command block CBd to which the defense commands are not input within the defense time. It is noted again that the defense time line Ad may not displayed, and that display on each command block CBd may be symbols of "Δ", "□", "X", and "○" corresponding to the input defense commands.

### Battle System Display during Action Execution

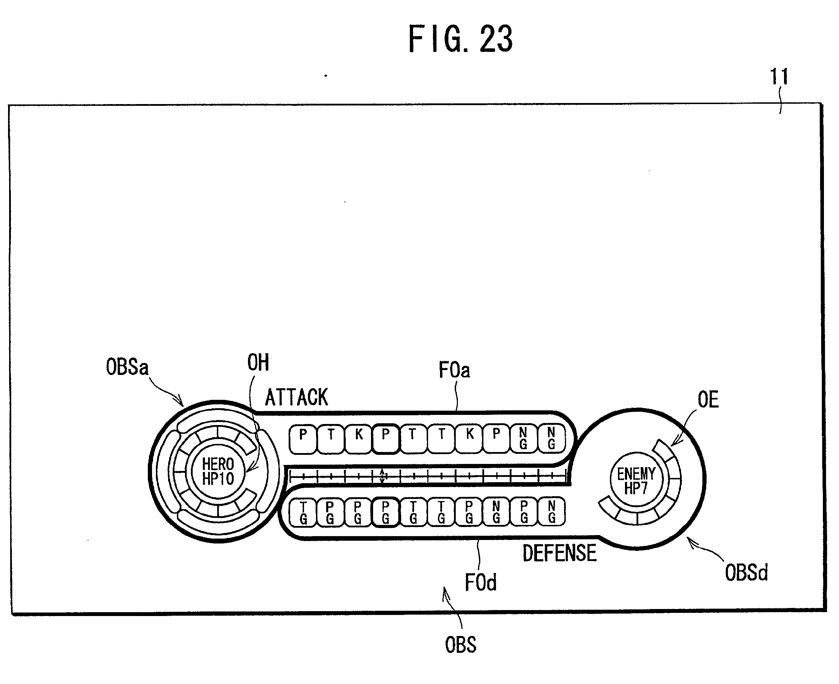

Next, in the case where the attack commands and defense commands are input, and each attack command and defense command as shown in Fig. 22, for example, are set to each command block CBa and CBd, as described above, the game program proceeds to the processing of the action scene of Fig. 8 through the action commencement scene of Fig. 7. When proceeding to the action scene, the game program changes the BS object OBS upon game screen 11 to that at the time of action execution shown in Fig. 23.

More specifically, for the BS object OBS of the action scene, the object frames FOa and FOd of the AS object OBSa and DS object OBSd are both displayed thick and discriminately colored. Furthermore, the game program during action execution erases the displays upon the button objects BT, BP, BK, and BR of the AS object OBSa, similarly to during the defense command input. Accordingly, the player may know that it is in the action scene.

### Details of Action Execution

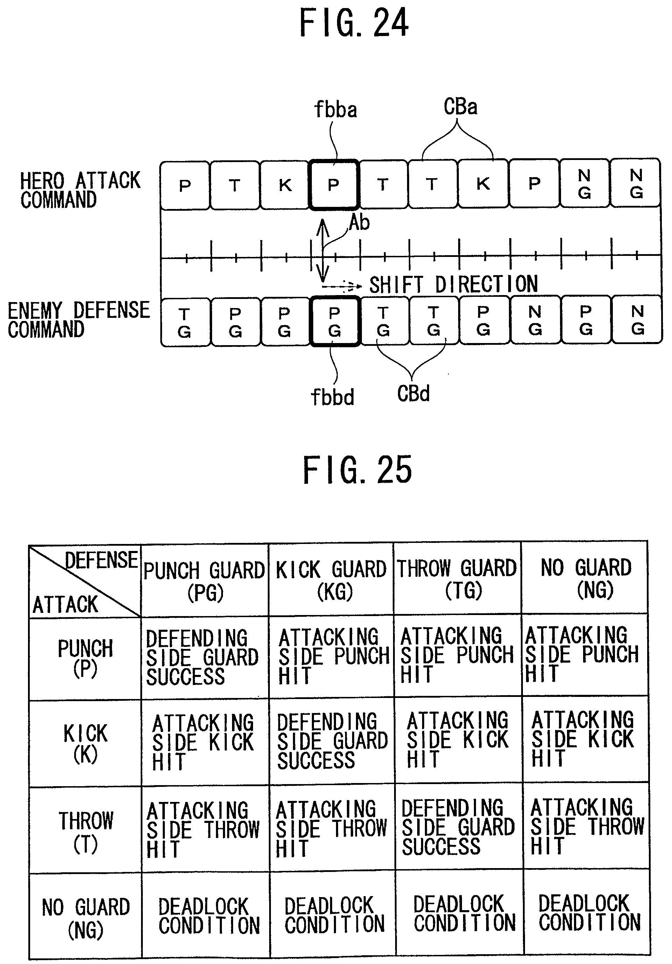

Hereafter, the attack commands and defense commands to be set to each of the command blocks CBa and CBd, and the execution of actions based on each of these commands are described using FIG. 24, wherein only the parts of command blocks CBa and CBd are enlarged.

The game program displays offense/defense time line Ab and command execution frames (hereafter, simply notated as execution frames fbba and fbbd) upon game screen 11 during action execution, as shown in FIG. 24. The offense/defense time line Ab shifts to the right along with the passage of time. The execution frames fbba and fbbd are objects that are instructed by the offense/defense time line Ab and that represent that commands are being executed, and is color coded, for example. Note that offense/defense time line Ab may not be displayed.

Then, the game program makes the hero character HC battle against the enemy character EC according to the attack commands and defense commands specified by the offense/defense time line Ab and execution frames fbba and fbbd during the action scene shown in FIG. 8. That is, the hero character HC attacks according to the attack commands specified by the offense/defense time line Ab and command execution frame fbba; whereas, the enemy character EC defends according to the defense commands specified by the offense/defense time line Ab and command execution frame fbbd.

Here, the attack commands include "PUNCH (P)", "KICK (K) ", and "THROW (T)"; the defense commands include "PUNCH GUARD (PG)", "KICK GUARD (KG)", and "THROW GUARD (TG)"; and furthermore, both attacking and defending include "NO GUARD (NG)".

Each of these attack commands and defense commands has a relationship as shown in FIG. 25. The game program judges based on the relationship whether or not the attacking from the attack commands and the defending from the defense commands are appropriate; moreover, it calculates the game points (hit points HP) based on if either attack or defense succeeded (or if either failed). More specifically, in this FIG. 25, the game program judges that, for example, guarding of the defending side succeeds in the case where the attack command is "PUNCH (P)" and the defense command is "PUNCH GUARD (PG)"; for example, attacks from the attacking side succeed (PUNCH HIT) in the case where the attack command is "PUNCH (P)" and the defense command is "KICK GUARD (KG)"; for example, attacks from the attacking side succeed (PUNCH HIT) in the case where the attack command is "PUNCH (P)" and the defense command is "THROW GUARD (TG)"; or attacks from the attacking side succeed (PUNCH HIT) in the case where the attack command is "PUNCH (P)" and the defense command is "NO GUARD (NG)". Other relationships between "KICK (K)" and each GUARD, or "THROW (T)" and each GUARD are the same. However, in the case where the attacking side is "NO GUARD (NG)", both sides are in a dead lock condition (the state of both characters only facing the other) even when the defending side command is "PUNCH GUARD (PG)", "KICK GUARD (KG)", "THROW GUARD (TG)", or "NO GUARD (NG)".

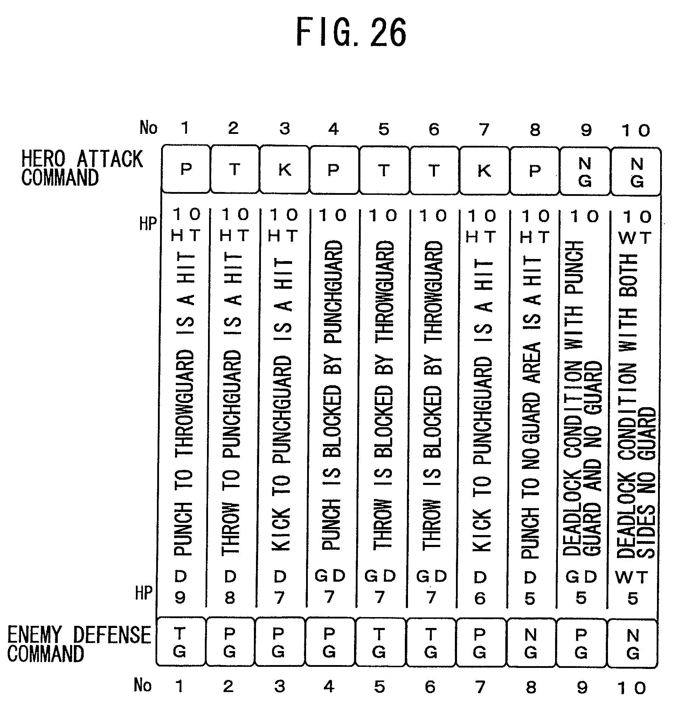

Accordingly, in the case where the attack commands and defense commands, for example, are set as shown in FIG. 22, and actions, for example, are executed as shown in FIG. 24, the offense/defense results between the hero character HC side and enemy character EC side is as shown in FIG. 26. Namely, to begin with, the first action has the attack command as "PUNCH (P)", and the corresponding defense commands as "THROW GUARD (TG)". Thus, THROW GUARD of the defending side is not effective, and PUNCH of the attacking side becomes a HIT. At this time, one point is subtracted from the "10" hit points HP of the defending side becoming "9". Next, the second action has the attack command as "THROW (T)" and the defense command as "PUNCH GUARD (PG)". Thus, PUNCH GUARD of the defending side is not effective, and THROW of the attacking side becomes a HIT. At this time, one point is subtracted from the "9" hit points HP of the defending side becoming "8". The third action has the attack command as "KICK (K)" and the defense command as "PUNCH GUARD (PG)". Thus, PUNCH GUARD of the defending side is not effective, and KICK of the attacking side becomes a HIT. At this time, one point is subtracted from the "8" hit points HP of the defending side becoming "7". Next, the fourth action has the attack command as "PUNCH (P)" and the defense command as "PUNCH GUARD (PG)". Thus, PUNCH of the attacking side is blocked by PUNCH GUARD of the defending side. At this time, the hit points HP of the defending side are maintained at "7". Hereafter, the fifth, sixth, and seventh actions proceed in the same manner as described above, thus their descriptions are omitted. Next, for example, the eighth action has the attack command as "PUNCH (P)" and the defense command as "NO GUARD (NG)". Thus, PUNCH from the attacking side hits to NO GUARDs of the defending side. At this time, one point is subtracted from the hit points HP of the defending side becoming "5". The ninth action has the attack command as "NO GUARD (NG)" and the defense command as "PUNCH GUARD (PG)". Thus, the attacking side and defending side are in a dead lock condition. At this time, the hit points HP of the defending side are maintained at "5". Thelasttenthaction has both attack command and defense command as "NO GUARD (NG)". Thus, the attacking side and defending side are in a dead lock condition. At this time, the hit points HP of the defending side are maintained at "5".

Furthermore, the game program performs effects display according to the real time outcome resulted (individual hits or guarding success) from the attack commands and defense commands respectively set upon the command blocks CBa and CBd, which are specified by the offense/defense time line Ab and the execution frames fbba and fbbd of each from command blocks CBa and CBd in the action scene. It is noted that the effects display for the command block CBa of the attacking side includes hit effect in the case where the attack is a HIT, and dead lock effects in the case of a dead lock condition; and for the command block CBd of the defending side, damage effects in the case of not being able to defend, dead lock effects in the case of a dead lock condition, and deathblow effects in the case where the deathblow described later is activated.

### Attack Command Input When Player Side Becomes Defending Side

Next, for example, the state in the case where the enemy character side becomes the first attacking side by the continuous hits mini-game, or in the case where the player side (hero character side) becomes the defending side by offense/defense switching will be described.

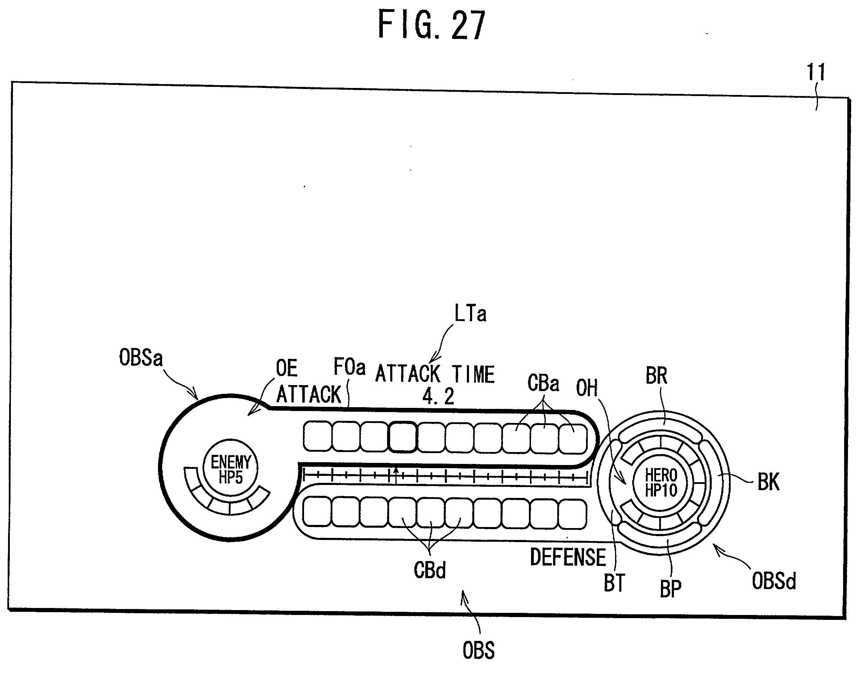

When the hero character HC becomes the defending side, the game program configures the BS object OBS such that as shown in FIG. 27, the AS object OBSa including the FC object OE of the enemy character EC is positioned on the left side, and the DS object OBSd including the FC object OH of the hero character HC and the button objects BR, BK, BP, and BT are positioned on the right side. It is noted that each element other than the FC objects OH and OE in the AS object OBSa and DS object OBSd are similar to that in FIG. 17 and such described above so their descriptions are omitted. However, this example of FIG. 27 shows the case where the player side (hero character side) becomes the defending side by offense/defense switching after actions described with FIG. 23 through FIG. 26 are complete. Thus, the hit points HP of the enemy character EC side becomes "5" and the hit points of the hero character HC side remains "10".

Then, in this state, the attack commands are input from the enemy character EC side as previously described in the video game. However, in the case where the player controls the hero character HC, the game program does not display the attack commands input from the enemy character EC side upon the command block CBa in the AS object OBSa as in the example of FIG. 27. Accordingly, the player cannot see the input attack commands. Namely, this video game enhances the difficulty of the game by preventing the attack commands being input from being seen by the player.

### Defense Command Input When Player Side Becomes Defending Side

Next, the video game comes to allow for defense command input of the hero character HC side (player side) after input of the attack commands from the enemy character EC side is complete.

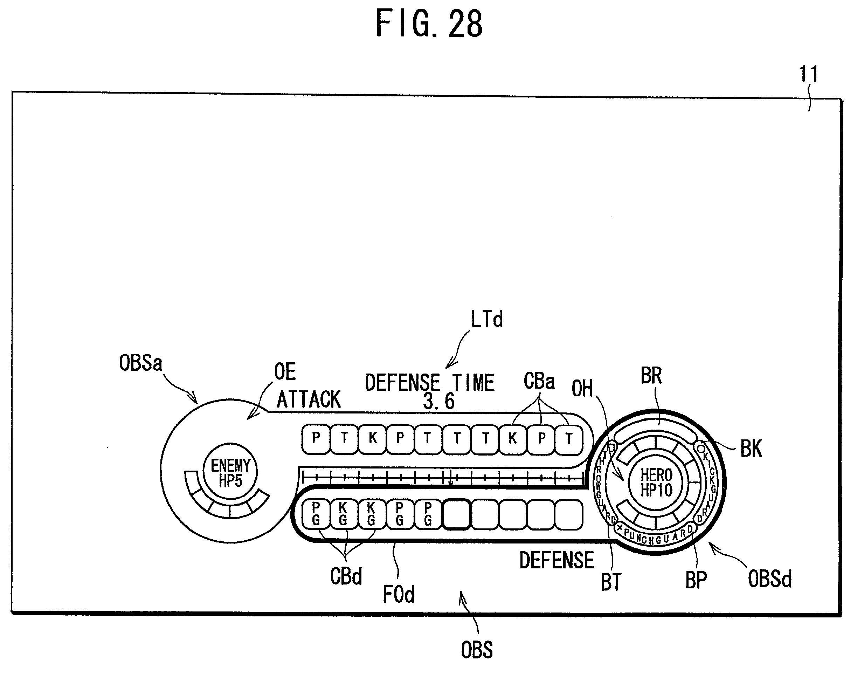

The game program displays upon game screen 11 the BS object OBS as shown in FIG. 28 during defense command input of the hero character HC side.

Here, the button objects BT, BP, BK, and BR upon the DS object OBSd of FIG. 28 are configured approximately the same as the predetermined buttons (for example, "Δ", "□", "X", and "○" buttons) provided upon the game controller, as well as respectively comprise the corresponding symbols "Δ", "□", "X", and "○". However, when the hero character HC controlled by the player is the defending side as in this example, each button objects BT, BP, BK, and BR also comprise characters for defense command input. More specifically, when assuming that the defense commands of "THROW GUARD (TG)", for example, are assigned to the "□" button upon the game controller; the defense commands of "PUNCH GUARD (PG)", for example, are assigned to the "X" button upon the game controller; and the defense commands of "KICK GUARD (KG)", for example, are assigned to the "○" button, the button objects BT, BP, and BK comprise corresponding symbols of the "Δ", "□", "X", and "○" buttons in addition to characters representing those defense commands (for example, "THROW GUARD", "PUNCH GUARD", and "KICK GUARD", and the like). It is noted that at this time, since there are no commands assigned to the "Δ" button upon the game controller, the button object BR does not comprise the symbol "Δ" and characters.

In addition, the game program displays upon the command block CBa the commands input by the enemy character EC side only for a predetermined display allowable time (defense time in this example) . Needless to say, in order to raise the game level of difficulty, it is preferable that the commands input by the enemy character EC side may not be displayed, or that the display allowable time may be set shorter than the defense time. The player controlling the hero character HC in this state operates the game controller to input defense commands within the defense time period as described above.

### Action Execution When Player Side Becomes Defending Side

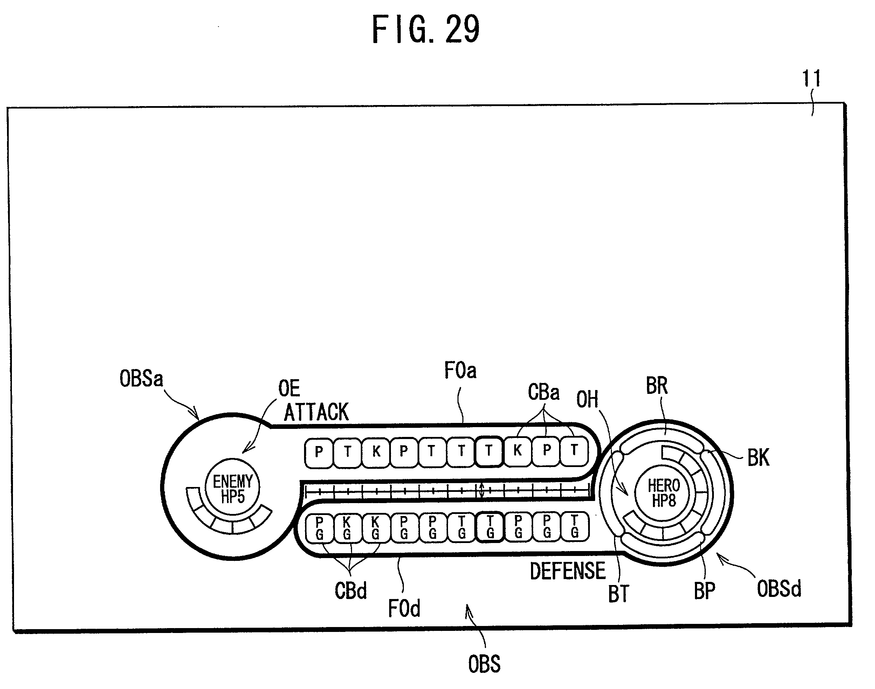

Next, after the attack commands and defense commands are input, the game program changes the BS object OSB upon game screen 11 as shown in FIG. 29 to execute actions according to each attack command and defense command in the same manner as described with FIG. 23 through FIG. 26.

### Description of Combination Attacks

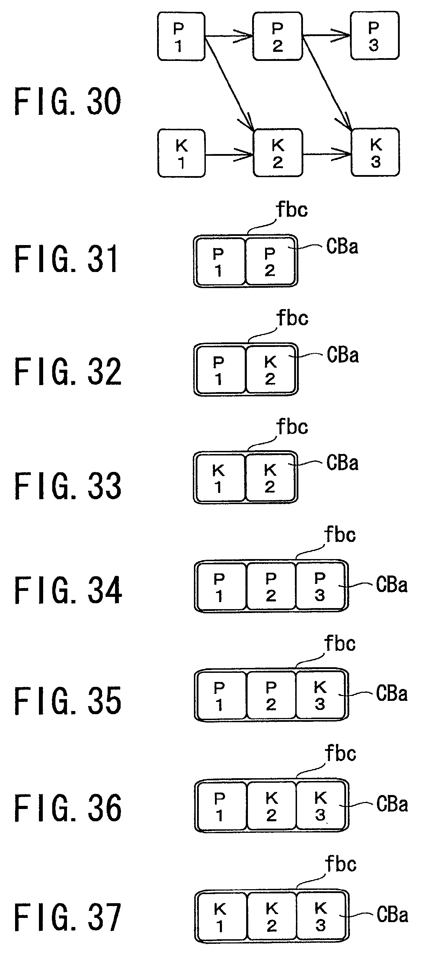

Incidentally, this video game can also set combination attacks comprised of a combination of consecutive attack commands during the attack command input. The combination attacks are set, as an example, when command input is performed in combinations of the connections shown by arrows in FIG. 30. More specifically, this video game allows for setting various combination attacks, such as a combination (P1, P2) of two consecutive "PUNCHes" as shown in FIG. 31; a combination (P1, K2) of a consecutive "PUNCH" and "KICK" as shown in FIG. 32; a combination (K1, K2) of two consecutive "KICKS" as shown in FIG. 33; a combination (P1, P2, P3) of three consecutive "PUNCHes" as shown in FIG. 34; a combination (P1, P2, K3) of two consecutive "PUNCHes" and a "KICK" as shown in FIG. 35; a combination (P1, K2, K3) of consecutive "PUNCH" and two consecutive "KICKs" as shown in FIG. 36; and a combination (K1, K2, K3) of three consecutive "KICKs" and the like. When the attack commands are input in any of the combination patterns, the game program bundles each command block CBa of the combinations of those combination attacks by the combination attack frame (hereafter, simply notated as attack frame fbc).

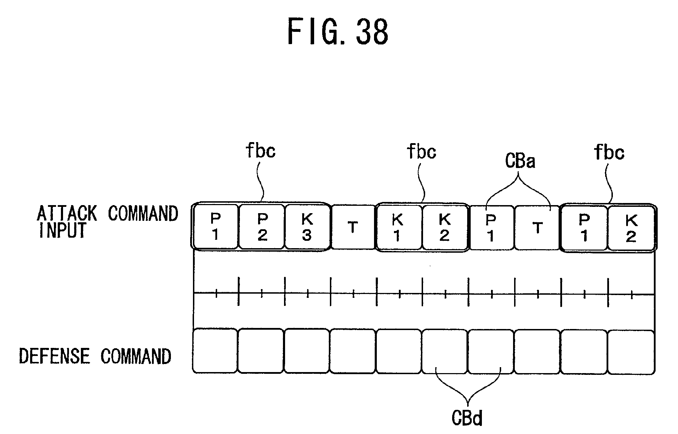

Thus, as the example of FIG. 38, when each of the attack commands, for example, is input in the order of "P1, P2, K3, T, K1, K2, P1, T, P1, and K2", the game program bundles each command block CBa for "P1, P2, K3", each command block CBa for "K1, K2", and each command block CBa for "P1, K2" according to the attack frame fbc.

### Command Block Display Method During Command Inputs for Combination Attacks

Here, when input of the combination attacks is performed during the attack command input, and the player side performs the defense command input next, the game program displays attack commands upon each command block CBa of the AS object OBSa only for a predetermined period from when beginning the inputting of defense commands (display allowable time is, for example, two seconds and the like). Then, after the predetermined time has elapsed, the game program displays, for example, only the starting attack command of the combination attacks, and fades out the display of the other attack commands.

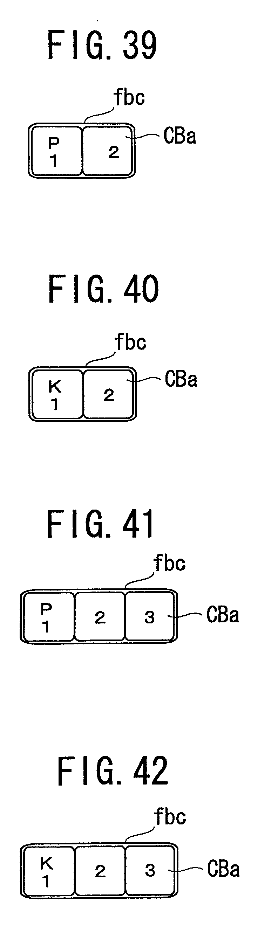

Namely, describing with FIG. 39 through FIG. 42 that correspond with the examples of FIG. 31 through FIG. 37, in the case where the predetermined period has elapsed from when beginning the inputting of defense commands, the game program displays the combination of "P1, P2" and "P1, K2" shown in FIGS. 31 and 32 as "P1, 2" as shown in FIG. 39; the combination of ""K1, K2" shown in FIG. 33 as "K1, 2" as shown in FIG. 40; the combination of "P1, P2, P3", "P1, P2, K3", and "P1, K2, K3" shown in FIG 34 through FIG. 36 as "P1, 2, 3" as shown in FIG. 41; and the combination of "K1, K2, K3" shown in FIG. 37 as "K1, 2, 3" as shown in FIG. 42.

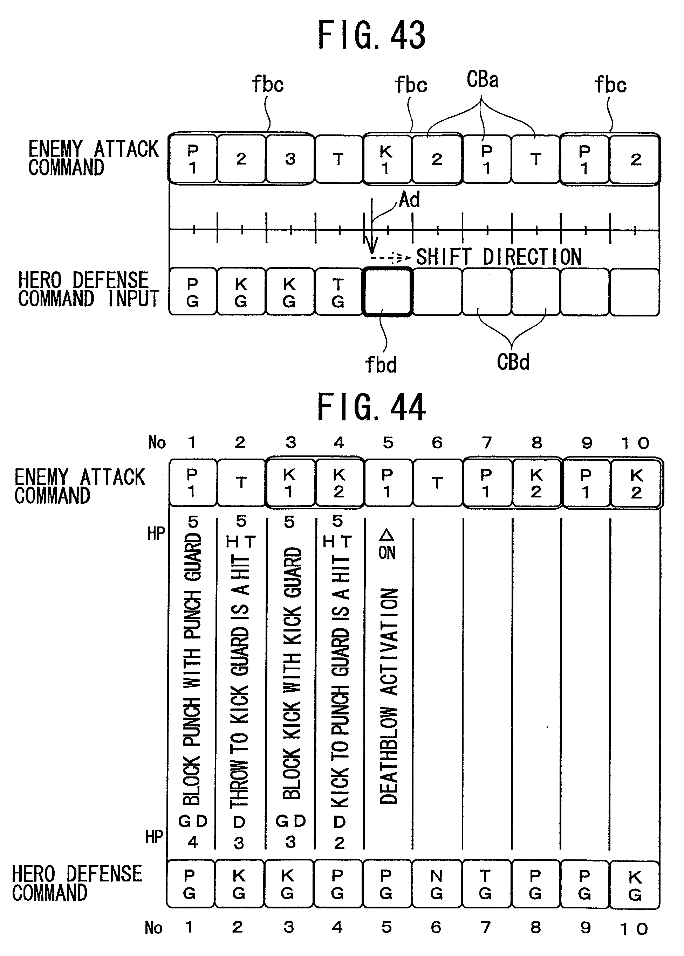

Thus, when each attack command is input in the order of "P1, P2, K3, T, K1, K2, P1, T, P1, and K2" as the example of FIG. 38, the game program displays the attack commands as "P1, 2, 3, T, K1, 2, P1, T, P1, 2" as shown in FIG. 43 upon each command block CBa of the AS object OBSa after the predetermined period has elapsed from the beginning of the next defense command input. It is noted that the game program may also display not the starting command but only the last command or intermediate commands of the combinations after the predetermined period has elapsed. Furthermore, the game program may also not display any attack commands relative to the combination attacks after the predetermined period has elapsed.

As described above, in the case where input of attack commands is performed in combination with the combination attacks, and the player side performs input of defense commands next, this video game may not display some or all of the attack commands relative to the combination attacks after the predetermined period has elapsed from when beginning the inputting of defense command. Accordingly, the video game has a higher game difficulty (difficulty of inputting the correct defense command) in comparison to the case where the commands input for combination attacks are not performed.

### Details of Deathblow Activation

In the case where actions (battle) are executed in the manner as described above, the hit points HP of the hero character HC and enemy character EC gradually decrease, and the hit points HP of the defending side is lower than the predetermined value (for example, larger than "0" and smaller than "3"), the defending side is able to activate the deathblow. Here, the player can predict in advance that the hit points HP of the defending side will become "0"; namely, the defending side will lose, and the attacking side will win as a result of continuing the action scene by viewing the set attack commands and defense commands, and remaining hit points HP. Thus, as a method of getting rid of situations where the game becomes uninteresting because of predicting in advance the offense/defense results of the action scene, this video game allows for activation of deathblows when the hit points HP of the defending side are smaller than the predetermined value.

This video game is provided with the following rules for the activation of the deathblow and deathblow avoiding mini-game. Namely, for example, the deathblow can be activated only from the one on the defending side in the action scene, and it can be activated when the remaining hit points HP of the defending side is larger than "0", and "3" or smaller. The deathblow can be activated any number of times if the conditions of the hit points HP are satisfied. When the deathblow is activated, the character (character being the defending side), for example, can provide a powerful weapon (for example, powerful weapon such as swords and guns rather than bare hands), can activate the especially powerful "technique", and can attack the opposing character by using the weapon and the powerful technique. The weapons and techniques that may be used as deathblows are only those selected in advance from a plurality of weapons and techniques, for example, from the game's initial menu. Thus, deathblow cannot be activated if any weapons or techniques are not selected from the game initialization menu. In the case where the deathblow is activated from the defending side, the attacking side must execute deathblow avoiding mini-game for avoiding the deathblow. In the case the deathblow avoiding mini-game is failed, the side of the character (character on the attacking side) that executes the deathblow avoiding mini-game always dies. On the other hand, in the case where the character (character on the attacking side) that executes the deathblow avoiding mini-game succeeds thereof, each command after activating the deathblow in this action scene is cancelled. Then, the game program proceeds to the next action scene.

Hereafter, a concrete example will be described. For example, it is assumed that the hero character HC side is the defending side and the enemy character EC side is the attacking side, wherewith each of the attack commands and defense commands is set as shown in FIG. 44, for example.

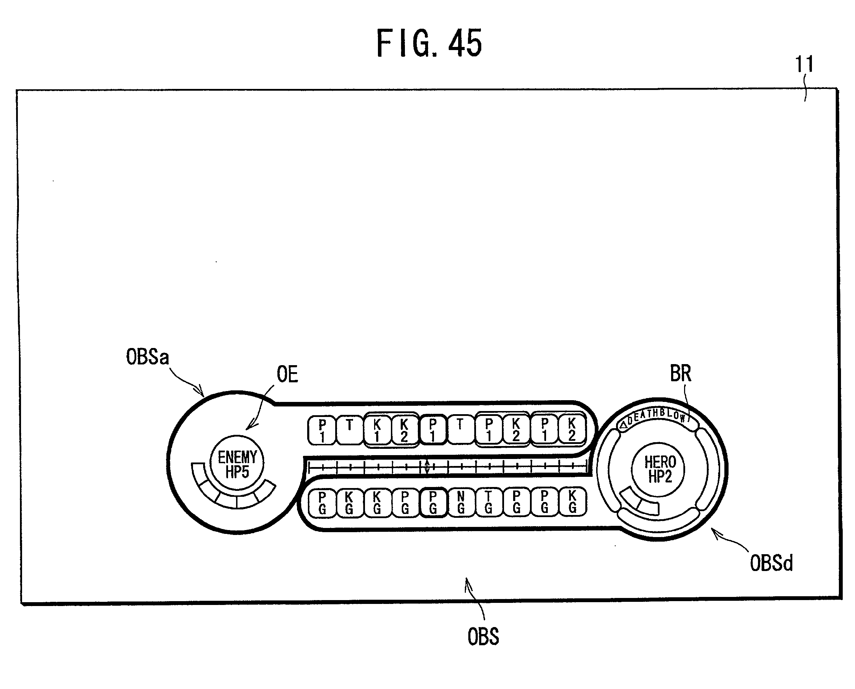

In this example of FIG. 44, the actions progress in order from the first action, and when the remaining hit points HP of the hero character HC, which is the defending side, gradually decreases becoming "3" or smaller, the game program conducts display upon the BS object OBS as shown in FIG. 45. It is noted that this example of FIG. 45 shows a displaying example of the BS object OBS when the fourth action ends and proceeds to the fifth action, and the remaining hit points HP of the hero character HC have reduced down to "2".

In this manner, in the case where the value of the hit points HP of the character (hero character HC) controlled by the player is "3" or smaller (however, larger than "0"), the game program assigns the deathblow commands that instruct the activation of the deathblow to, for example, the "Δ" button upon the game controller, and displays a symbol representing the "Δ" button and characters ("deathblow") representing the deathblow commands upon the button object BR, which is provided upon the DS object OBSd. In this state, when the player operates the "Δ" button upon the game controller to turn ON as shown in FIG. 44, the game program instructs the hero character HC to activate the deathblow. It is noted that in the case where there is only one player, and that the hero character HC controlled by the player fights with the enemy character EC controlled by the game program, when the hero character HC side activates the deathblow, the deathblow avoiding mini-game executed by the enemy character EC proceeds with the contents predetermined by the game program.

### Concrete Examples of Deathblow Avoiding Mini-Game

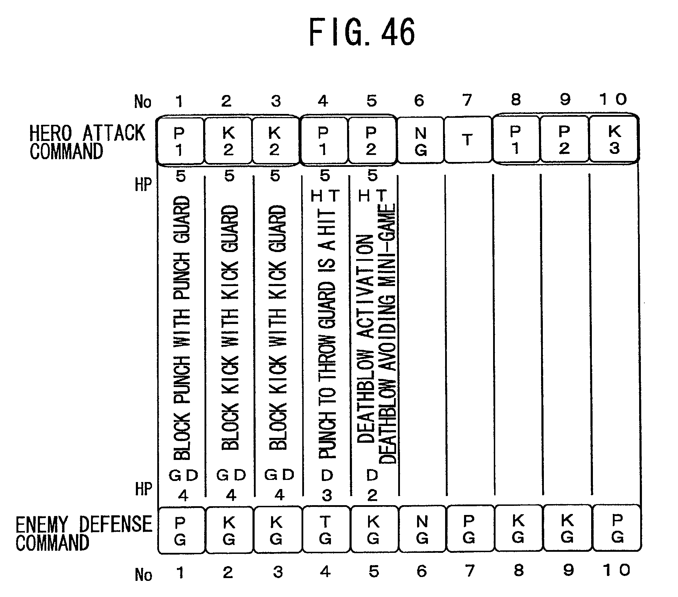

For example, it is assumed that the hero character HC side is the attacking side, the enemy character EC side is the defending side, and each attack command and defense command is set, for example, as shown in FIG. 46.

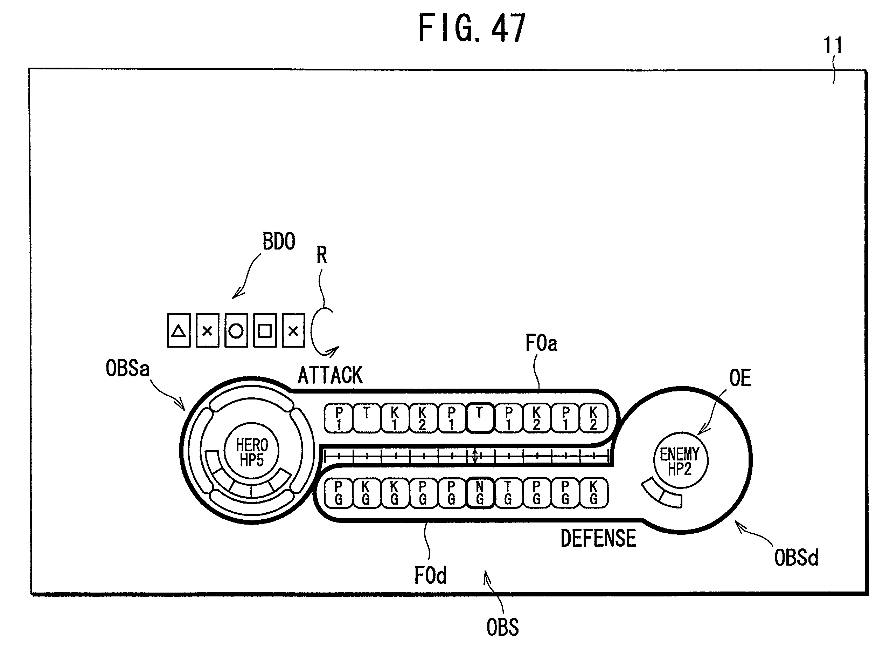

In the example of FIG. 46, the actions progress in order from the first action, and when the remaining hit points HP of the enemy character EC, which is the defending side, gradually decreases, becoming "3" or smaller, and the deathblow is activated, the display upon the BS object OBS is as shown in FIG. 47. It is noted that the example of FIG. 47 shows a displaying example of the BS object OBS when the fifth action ends and proceeds to the sixth action, and the remaining hit points HP of the enemy character EC side reduces down to "2", the deathblow is activated.

Thus, if the deathblow is activated from the defending side when the player side (hero character HC side) is attacking, the game program displays button drum objects as shown in FIG. 47 near the AS object OBSa of the hero character HC, in which is the attacking side. The button drum objects BDO are, for example, five in a set. Each of those button drum objects BDO is displayed rotating in the direction indicated by the arrow R in the figure at different speeds, respectively. Furthermore, each of these button drum objects BDO, for example, comprises symbols corresponding to the "Δ", "□", "X", and "○" buttons provided upon the game controller. However, when each of the button drum objects BDO rotate, those "Δ", "□", "X", and "○" symbols may be seen only a little, or may hardly be seen due to the rotation.

Here, during deathblow avoiding mini-game execution, the game program stops the rotation, for example, in order from the left side of each button drum object BDO when the player repeatedly pushes the desired button from the "Δ", "□", "X", and "○" buttons upon the game controller within a predetermined input acceptable time (for example, one second) . At this time, if the button pressed by the player matches the display upon each button drum object BDO that stops rotating, the game program judges that the deathblow avoiding mini-game was successful, otherwise, it judges it as a failure if not matches. It is noted that if the deathblow avoiding mini-game succeeds, the game program lights up each button drum object BDO, and if it fails, turns them off. Accordingly, the player may easily know whether or not the deathblow avoiding mini-game succeeded or failed.

Furthermore, the number of the button drum objects BDO and rotation speed, and the type of buttons displayed upon the button drum objects BDO are changed according to the difficulty of the game (namely, strength of the enemy, or strength of the deathblow). For example, the difficulty becomes higher in cases where there are many button drum objects BDO, the rotation speed is fast, and there are many types of buttons. Conversely, the difficulty of the game is lower in cases where there are few button drum objects BDO, the rotation speed is slow, and there are a few types of buttons.

It is noted that the game program may judge the degree of success or failure of the deathblow avoiding mini-game, for example, according to the number of matches of buttons pressed by the player with the display upon the button drum objects BDO. The degree of success or failure of the deathblow avoiding mini-game can be expressed by the amount of damage. For example, when there are many matches with the display, damage is hardly sustained even though some deathblows are absorbed from the enemy. Conversely, where there are few matches with the display, many deathblows are absorbed from the enemy, and severe damage is sustained though it does not completely fail.

### Evaluation of Audience Rating

In addition, this video game has also adopted the concept of an audience rating similar to common TV programs as it is made such that the game progresses in the manner of a TV program. In other words, all of the actions of the hero character HC are reflected in real time as audience ratings of TV programs, wherewith this video game is made such that, for example, the program terminates (Game Over) when the audience rating becomes lower than a given standard.

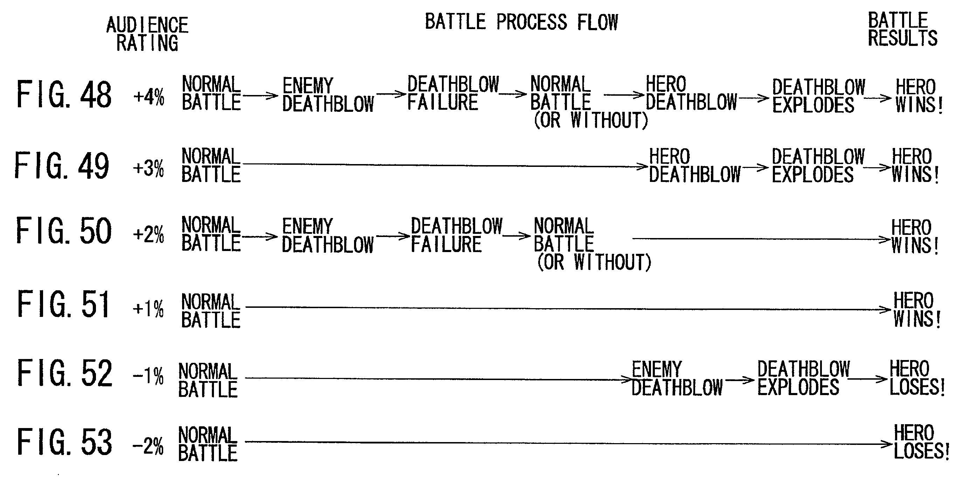

Furthermore, the game program adds to or subtracts to/from the audience rating of the scene where the characters are performing a battle against each other as described above according to the battle processing flow as illustrated in FIG. 48 to FIG. 53, for example.

In the example of FIG. 48, normal fighting is performed at the start; afterwards, the enemy character EC that is on the defending side activates a deathblow. After that deathblow fails, the battle scene returns to normal fighting scene, for example; next, the hero character HC that has come to be on the defending side activates a deathblow. Then, when that deathblow explodes, the battle results of this game become the state of where hero character HC side has won. In this manner, when the game flow results such that both the hero character HC and enemy character EC activate deathblows wherewith a varied battle process unfolds and the hero character HC ultimately wins, the game program adds, for example, 4% to the audience rating. In other words, this audience rating is greatly increased.

Furthermore, in the example of FIG. 49, normal fighting is performed at the start; afterwards, the hero character HC that is on the defending side activates a deathblow. Then, when that deathblow explodes, the battle results of this game become the state of where hero character HC side has won. In this manner, when the game flow results such that the enemy character EC is knocked down by a deathblow of the hero character HC, the game program adds, for example, 3% to the audience rating. In other words, this audience rating is increased to an extent.

Furthermore, in the example of FIG. 50, normal fighting is performed at the start; afterwards, the enemy character EC that is on the defending side activates a deathblow. After that deathblow fails, it becomes the state of where the hero character HC side has won by normal fighting, for example. In this manner, when the game flow results such that the deathblow fails and the hero character HC wins by normal fighting, the game program adds, for example, 2% to the audience rating. In other words, this audience rating is moderately increased.

Moreover, in the example of FIG. 51, normal fighting is performed from start to finish. Then, it becomes the state of where the hero character HC has ultimately won. In this manner, when the game flow results such that the hero character HC ultimately wins solely by normal fighting from start to finish, the game program adds, for example, 1% to the audience rating. In other words, this audience rating is only increased a little.

On the contrary, in the example of FIG. 52, normal fighting is performed at the start; afterwards, the enemy character EC that is on the defending side activates a deathblow. Then, that deathblow explodes and the hero character HC side is defeated. In this manner, when the game flow results such that the hero character HC is defeated by a deathblow of the enemy character EC, the game program subtracts, for example, 1% from the audience rating. Namely in this case, it is reduced since the hero character HC is defeated.

Furthermore, in the example of FIG. 53, normal fighting is performed from start to finish. Then, the hero character HC side is ultimately defeated. In this manner, when the game flow results such that the hero character HC is defeated by normal fighting from start to finish, the game program subtracts, for example, 2% from the audience rating. In other words, since the hero character HC is not only defeated but a deathblow is not activated, the audience rating is greatly reduced.

As in the above, this video game is made such that in the case where the hero character HC side ultimately wins, the audience rating is increased; oppositely in the case of losing, the audience rating is reduced. Furthermore, the addition and reduction of the audience ratings are varied by the complexity of the battle flow and whether or not either character activates deathblows and the like. It is noted that it is possible for the audience rating to always be displayed upon the screen, and is also possible to be displayed upon the screen by requests from the player (for example, predetermined operation of a button upon a game controller and the like).

### Schematic Structure of Game Program

Next, the structure of a game program that realizes a video game such that in the TV program-like video game before actual battle is performed, the attack commands of the attacking side and defense commands of the defending side are divided and input, wherein afterwards, the characters fight in conformity with the input attack commands and defense commands, will be described.

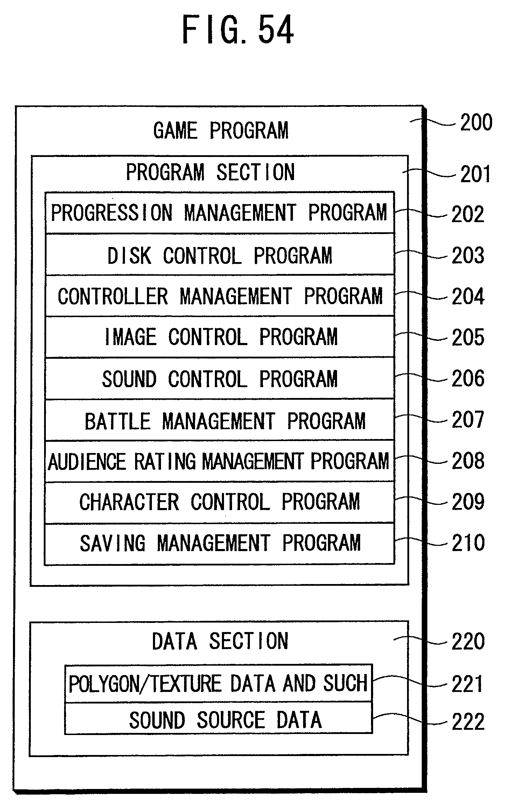

This game program has a data structure as shown in FIG. 54, for example, whereby it may be recorded on recording media such as semiconductor memory and optical disks, for example, DVD-ROMs and CD-ROMs, and may be downloaded via transmission media such as communication lines. It is noted that this data structure shown in FIG. 54 is one that conceptually represents only the main sections of a program section and data section included in this game program, and does not represent an actual program structure.

As shown in FIG. 54, roughly classified, a game program 200 has a program section 201 for a main CPU and the like of a video game machine, which will be described later, to execute video games, and a data section 220 including various data, which is to be utilized when executing this video game.

The data section 220 has at least polygon/texture data and such 221 and sound source data 222 as various data that are utilized when executing the video game.

The polygon/texture data and such 221 is data for generating polygon or texture when generating a game screen that includes the hero character HC, enemy character EC and other non-player characters (NPC: characters not operated by players); and background images or each of the other objects and the like. The sound source data 222 is waveform data, which is utilized when generating game sounds, music of musical pieces, sound effects and the like.

The program section 201 has at least a progression management program 202, a disk control program 203, a controller management program 204, an image control program 205, a sound control program 206, a battle management program 207, an audience rating management program 208, a character control program 209 and a saving management program 210 as programs for executing video games.

The progression management program 202 is a program for managing progression of the TV program-like video game from start to finish; and is a program for managing the display of various menu screens, such as an initial menu and command menu, and the entire map screen display, and the overall progression and actions of the game, such as actions corresponding to button input operations and the like for predetermined messages, time elapse within the game and the like. The disk control program 203 is a program for performing the control of reading programs and data and the like from the optical disks and HDDs according to the beginning or progression of the video game. The controller management program 204 is a program for managing the input signals depending on the push operation of various buttons or the operation of right and left analog operation parts upon a game controller, which will be described later, by the player; the action mode; and vibration generation, which will be described later, and the like of the game controller. The image control program 205 is a program for the production of a game image and display upon a television monitor screen thereof. The sound control program 206 is a program for the generation of sound and music within the game and for output thereof.

The battle management program 207 is a program for such as managing the entire flow of battle processing as described above and the flow of each battle, collecting information on battle outcome and hit points HP obtained during the battle, and sending to the progression management program 202 the compilation of the information on battle outcome and hit points HP obtained. Furthermore, the battle management program 207 includes a program for obtaining and managing the attack commands and defense commands input by the player; a commands generation program for generating the attack commands and defense commands on the game machine side; and a commands execution program for executing processing corresponded to those commands by working together with other programs 202, 205, 209 and the like. The audience rating management program 208 is a program for managing the audience rating described above according to, for example, the battle flow and the like.

The character control program 209 is a program for controlling actions and such of the each character in the video game. The saving management program 210 is a program for managing saved data, which stores the hit points HP generated in the video game and mid-game data as the saved data on a memory card described later, and for reading the saved data that is stored on the memory card.

### Flow of Game Program during Execution

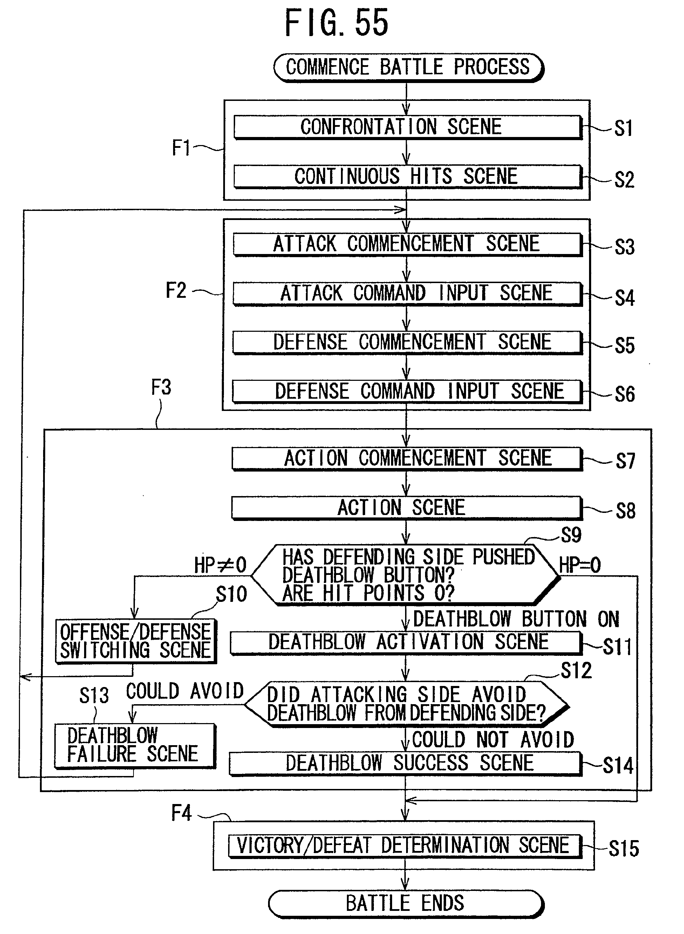

Hereafter, from the game programs shown in FIG. 54 described above, the main process flow concerning the present invention will be described while referencing the flowchart of FIG. 55. More specifically, FIG. 55 illustrates the flow from the confrontation scene to the victory/defeat determination scene, and the flow of each process such as the activation of deathblows depending on the hit points HP. It is noted that the steps of the flow chart described below are realized by operating each program component, which configures this game program, with the built-in CPU of the video game, which will be described later.

In FIG. 55, with this video game, when the battle process begins, during the processing of step S1, the battle management program 207, to begin with, works together with the image control program 205 so as to display upon game screen 11 a confrontation scene of first attacker/second attacker determination phase F1.

When proceeding to the continuous hits scene after the confrontation scene, during the processing of step S2, the battle management program 207 receives continuous hits signals of buttons upon a game controller, which the controller management program 204 manages; controls the size of the energy EN discharged from the hero character HC and enemy character EC based on those continuous hits signals; and furthermore, determines which will be on the first attacking side.

Next, when proceeding to command offense/defense phase F2, during the processing of step S3, the battle management program 207 works together with the image control program 205 so as to position the first attacking side character on the left side upon the screen and defending side character on the right, displaying upon game screen 11 the attack commencement scene.

When proceeding to the attack command input scene after the attack commencement scene, during the processing of step S4, the battle management program 207 receives pushing signals from buttons upon the game controller, which the controller management program 204 manages; receives attack command input from the attacking side character based on those pushing signals; and furthermore, performs the control of, for example, moving in conformity with attack commands the attacking side character by working together with character control program 209. It is noted that the command generation program in the battle management program 207 sets the attack commands in the case where the game program is the attacking side.

Next, when the attack command input scene ends, during the processing of step S5, the battle management program 207 works together with the image control program 205 so as to immediately display upon game screen 11 the defense commencement scene described above.

When proceeding to the defense command input scene after the defense commencement scene, during the processing of step S6, the battle management program 207 receives pushing signals of buttons upon the game controller from the controller management program 204; receives defense command input from the defending side character based on those pushing signals; and furthermore, performs the control of, for example, moving in conformity with defense commands the defending side character by working together with character control program 209. It is noted that the command generation program in the battle management program 207 sets the defense commands in the case where the game program is the defending side.

Next, when shifting to the action scene phase F3, during the processing of step S7, the battle management program 207 works together with the image control program 205 so as to display upon game screen 11 the action commencement scene.

When proceeding to action scene after the action commencement scene, during the processing of step S8, the battle management program 207 works together with the character management program 209 so that the attacking side character attacks in conformity with the attack commands, executing a battle wherein the defending side character defends in conformity with the defense commands.

During the action scene, the battle management program 207 performs judging of whether or not the defending side has been commanded activation of a deathblow (whether or not the deathblow button has been pushed); and furthermore, whether or not the hit points HP of the defending side have become "0".

In this step S9, during the processing of step S10, the battle management program 207 returns to the processing of step S3 after switching the attacking side and defending side in the offense/defense switching scene, when deathblows have not been activated, for example, and furthermore, the hit points do not become "0" and the battle in conformity with each attack command and defense command, which are set to the command block, ends.

On the other hand, in step S9, when the hit points HP of the defending side have become "0", during the processing of step S15, the battle management program 207 shifts to finish phase F4 so as to perform processing of the victory/defeat determination scene.

Furthermore, in step S9, when activation of a deathblow is commanded by the defending side, during the processing of step S11, the battle management program 207 proceeds to the deathblow activation scene; afterwards during the processing of step S12, judges whether or not the attacking side has avoided the deathblow from the defending side (whether or not the deathblow-avoiding mini-game has been successful).

With this judgment in step S12 when the attacking side has avoided a deathblow from the defending side, during the processing of step S13, the battle management program 207 returns to step S3 after performing the process of the deathblow failure scene.

On the other hand, with this judgment in step S12, when the attacking side has not avoided a deathblow from the defending side, during the processing of step S14, the battle management program 207 proceeds to step S15 after performing the process of the deathblow success scene so as to perform processing of the victory/defeat determination scene of finish the phase F4.

### System for Realizing TV Games

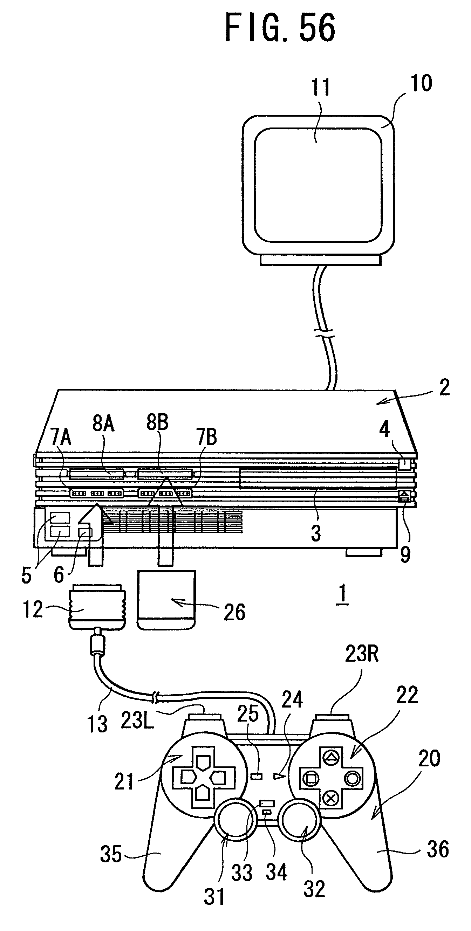

Next, in FIG. 56, the schematic structure of an example of video game system 1, which is capable of realizing the aforementioned video game, is described.

This video game system 1 is an entertainment system comprised of video game machine 2 as an example of a program execution apparatus of the present invention, which not only executes the video game described above, but also performs play back and the like of movies, for example; controller 20 that is connected to the video game machine 2 and is an operation terminal which is operated by the user (game player); and television monitor 10, which displays game content and movies and the like as well as outputs sound.

### Brief Description of Video Game Machine

The video game machine 2 comprises memory card slots 8A, 8B; controller ports 7A, 7B; disk tray 3; buttons 4 and 9; Institute of Electrical and Electronics Engineers (IEEE) 1394 connector 6; and Universal Serial Bus (USB) connector 5 and the like. The memory card slots 8A, 8B are configured as such so that memory card 26 is freely attachable/removable. The controller ports 7A, 7B are configured as such so that a connector 12 of a cable 13, which is connected to the game controller 20, is freely attachable/removable. The disk tray 3 is configured as such so that optical disks, for example, DVD-ROMs and CD-ROMs, may be loaded. The button 9 is an OPEN/CLOSE button for opening/closing the disk tray 3. The button 4 is an ON/STANDBY/RESET button for turning the power on or into standby, or resetting a game. Furthermore, it has been omitted from the figures, however, a power supply switch, an audio/visual output terminal (multi AV output terminal), a PC card slot, an optical/digital output terminal, an AC power input terminal and the like are provided on the rear panel of the video game machine 2.

The video game machine 2 executes, based on game programs read from a recording media, for example, optical disks such as the CD-ROMs and DVD-ROMs and semiconductor memory and also based upon commands from the player via controller 20, the previously mentioned game. Furthermore, the video game machine 2 executes the game based on game programs that are downloaded via various communication lines (transmission media) such as phone lines, LANs, CATV lines and communications satellite lines.

Furthermore, the video game machine 2 shown in FIG. 56 can connect two controllers 20 to the controller ports 7A, 7B. By connecting two controllers to the video game machine 2, two players may execute the game. Furthermore, the video game machine 2 can store various game data generated by executing a video game into the memory card 26 which is loaded into the memory card slot 8A or 8B. Afterwards, by reading game data that is saved on that memory card 26, the video game machine 2 can resume the execution of the game at the point in time it previously finished (for example, playing an episode).

Moreover, the video game machine 2 can not only execute a video game based on the game program, but can also play back for example, audio data, which is recorded on a CD, or a video such as a movie or audio data, which is recorded on a DVD. Furthermore, it is possible for the video game machine 2 to operate based on various application programs other than games. It is noted that a driver program for performing play back of DVDs is stored on memory card 26, for example . Accordingly, the video game machine 2 reads the driver program that is for performing play back of DVDs from memory card 26, which is loaded into the memory card slot 8A or 8B, so as to perform playing back of a DVD based on that driver program.

### Brief Description of Game Controller

The game controller 20 comprises left grip 35, right grip 36, left operation part 21 and right operation part 22, left analog operation part 31 and right analog operation part 32, first left pushbutton 23L, second left pushbutton not shown in the figures, first right pushbutton 23R and second right pushbutton not shown in the figures and the like. The left grip 35 is a portion for the player to grip so as to hold it within the palm of the left hand. The right grip 36 is a portion for the player to grip so as to hold it within the palm of the right hand. The left operation part 21 and right operation part 22 are portions for the player to respectively operate with the left and right thumbs in the state where those grips 35, 36 are gripped within the right and left hands. The left analog operation part 31 and right analog operation part 32 are portions for the player to respectively analog operate (operate the joystick) with the left and right thumbs in the state where grips 35, 36 are gripped within the left and right hands. The first left pushbutton 23L and the second left pushbutton not shown in the figure that are positioned therebelow are buttons for the player to respectively operate by depressing with the left index finger and middle finger, for example. The first right pushbutton 23R and the second right pushbutton not shown in the figures that are positioned therebelow are buttons for the player to respectively operate by depressing with the right index finger and middle finger, for example.

"Up", "down", direction keys, which the player operates when, for example, moving upwards and downwards upon a game image a game character (for example, hero character), and "left", "right" direction keys for moving leftwards and rightwards upon a game image a game character of a video game are provided on the left operation part 21. It is noted that the "up", "down", "left", and "right" direction keys are not only for directional commands of upwards, downwards, leftwards or rightwards, but may also be used for directional commands in diagonal directions. For example, by depressing the "up" direction key and "right" direction key simultaneously, the player may give a directional command of an upper-right diagonal direction to the video game machine 2. It is the same with the other keys, wherewith, for example, by depressing the "down" direction key and "left" direction key simultaneously, the player may give a directional command of a lower-left diagonal direction to the video game machine 2.

Furthermore, four command buttons ("Δ", "□", "X", "○" buttons respectively provided with Δ, □, X, ○ shaped stamps) respectively assigned with different functions according to the game program are provided on the right operation part 22. For example, the "Δ" button is assigned a function for menu display specification; the "X" button, for example, is assigned a function for specifying the deletion and such of selected items; the "○" button, for example, is assigned a function for specifying the determination and such of selected items; and the "□" button, for example, is assigned a function for specifying the display/not display of the table of contents and such. Furthermore, in the case of this video game, the game controller is assigned the aforementioned attack command, defense command, deathblow command and such for the "Δ", "□", "X", "○" buttons during a battle. It is noted that the functions assigned to each of these buttons and keys are examples, wherein various functions may be assigned by the game program.

The left analog operation part 31 and right analog operation part 32 respectively comprise a rotating operator capable of inclining in any direction of choice with the revolving supporting point of the operating axis as the center; and variable analog value output means for outputting variable analog values corresponding to the operation of the rotating operator. The rotating operator is mounted at the top of the operating axis, which is mounted by an elastic member such that it returns to a neutral standing position; and at times when the player is not operating at an inclination, it is held in an upright state (non-diagonal state) position (standard position). Furthermore, the variable analog value output means comprises, for example, a variable resistive element and the like, and is made such that the resistive value of the variable resistive element varies according to the operation of the rotating operator. When the rotating operators of the left analog operation part 31 and right analog operation part 32 are operated at an inclination, coordinate values of the XY coordinates according to the amount of slant and direction in contrast to the standard position are detected and the coordinate values are transmitted to the video game machine 2 as operation output signals. It is noted that the video game machine 2 in this case controls, for example, the characters' actions upon the game screen according to the operation output signals from the left analog operation part 31 and right analog operation part 32.

Furthermore, the game controller 20 comprises a mode selection switch 33, light display 34, select button 25, start button 24 and the like. The mode selection switch 33 is a switch for performing the selection of the operation mode, which makes the functions of left and right operation parts 21, 22 and left and right analog operation parts 31, 32 operate (analog operation mode) or stop (digital operation mode) . The light display 34 comprises a light emitting diode (LED) for the user to recognize the selected operation mode by displaying light. The start button 24 is a button for the player to command execution start, restart, pause and the like of a game. The select button 25 is a button for the player to command the displaying and such of the menu display or operation panel upon monitor screen 11. It is noted that in the case where the analog operation mode is selected by the mode selection switch 33, the light display 34 is controlled to turn ON, resulting in left and right analog operation parts 31, 32 to be in an operating state. On the other hand, in the case where the digital operation mode is selected, the light display 34 is controlled to turn OFF, resulting in left and right analog operation parts 31, 32 to be in a non-operating state.

When various buttons or operating parts upon this game controller 20 are operated by the player, the controller 20 generates operating signals corresponding to those operations, wherein those operating signals are transmitted to the video game machine 2 via the cable 13, connector 12 and controller port 7.

The controller 20 also comprises a vibration generating mechanism with in the left and right grips 35, 36. The vibration generating mechanism comprises a weight eccentric from the rotation axis of a motor, for example, and the motor rotates that weight so as to vibrate controller 20. This vibration generating mechanism operates in conformity with commands from the video game machine 2. By causing the vibration generating mechanism to operate, the controller 20 conveys the vibration to the player's hand.

### Internal Configuration of Video Game Machine

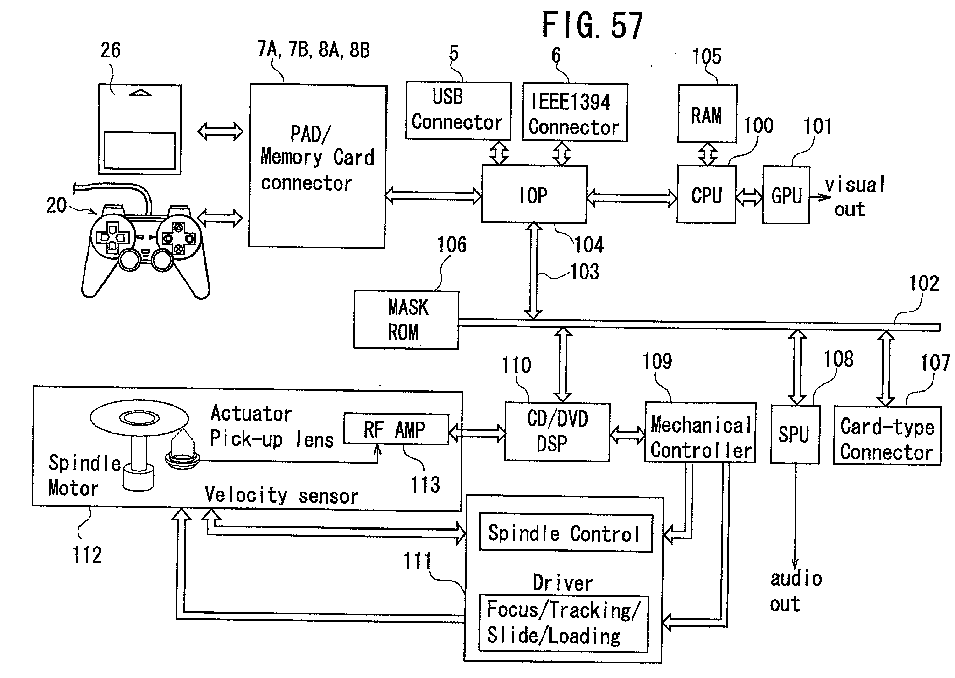

Next, an outline of the internal circuitry of the video game machine 2 will be described using FIG. 57.

The video game machine 2 comprises a main CPU 100, graphic processing unit (GPU) 101, IO processor (IOP) 104, optical disk player 112, main memory (RAM) 105, MASK ROM 106, sound processing unit (SPU) 108 and the like. The main CPU 100 performs signal processing and controlling of internal main structural elements based on various application programs such as game programs for realizing the aforementioned video game. The GPU 101 performs image processing. The IOP 104 performs interfacing between the exterior and interior of the apparatus and processing for maintaining downward compatibility. The main memory 105 has the function as the work area of the main CPU 100 or a buffer that temporarily stores data read from optical disks. The MASK ROM 106 stores, for example, initial setting programs for the video game machine 2, and programs (what are called handlers) for suspending and such the processing of the main CPU 100 and IOP 104 when various switches or buttons are pushed and then executing processing corresponding to the operations of these switches and buttons. The SPU 108 performs acoustic signal processing. The optical disk player 112 performs playback of optical disks such as the DVDs and CDs, which are recorded with application programs or multi-media data. Furthermore, the optical disk player 112 is comprised of a spindle motor, optical pickup, RF amp 113, sliding mechanism and the like. The spindle motor rotates optical disks such as DVDs and CDs. The optical pickup reads signals that are recorded on the optical disks. The sliding mechanism moves the optical pickup along the disk radius. THe RF amp 113 amplifies output signals from the optical pickup.

Moreover, this video game machine 2 also has a CD/DVD digital signal processor 110 (hereafter notated as DSP 110), driver 111, mechanical controller 109 and card-type connector 107 (hereafter notated as PC card slot 107). By digitizing output signals from RF amp 113 of the optical disk player 112, and applying, for example, error correction processing (CIRC processing) or expand/encode processing and the like, the DSP 110 plays back signals that are recorded on the optical disks. The driver 111 and mechanical controller 109 perform rotation control of the spindle motor of optical disk player 112; focus/tracking control of the optical pickup; and loading control of the disk tray and the like. The PC card slot 107 is an interface device for connecting, for example, a communication card and external hard disk drive and the like.

Each of these parts is respectively connected to the other, mainly via bus lines 102, 103 and the like. It is noted that the main CPU 100 and GPU 101 are connected by a dedicated bus. Furthermore, the main CPU 100 and IOP 104 are connected by the SBUS. The IOP 104, DSP 110, MASK ROM 106, SPU 108 and PC card slot 107 are connected by the SBUS.

By executing an initial setting program and the like stored on MASK ROM 106 or an operating system program for the main CPU read from an optical disk, the main CPU 100 controls all operations of the video game machine 2. Furthermore, the main CPU 100 also controls various operations of the video game machine 2 by executing various application programs and the like including game programs for executing the aforementioned video game. It is noted that these various application programs are read from an optical disks, for example, CD-ROMs and DVD-ROMs and the like so as to be loaded into the main memory 105, or downloaded via communication networks.

By executing an operating system program for the IO processor, which is stored on MASK ROM 106, the IOP 104 controls data input/output between the video game machine 2 and a PAD/memory card connector, which is comprised of the controller ports 7A and 7B and memory card slots 8A and 8B; data input/output between the video game machine 2 and the USB connector 5; data input/output between the video game machine 2 and the IEEE 1394 connector 6; and data input/output between the video game machine 2 and the PC card slot, as well as performing their data protocol conversion and the like. It is noted that the device ID of this video game machine 2 is also stored on the MASK ROM 106.

The GPU 101 has the function of a geometry transfer engine that performs processing of coordinate transformation and the like, and the function of a rendering processor; and performs drawing according to the drawing command from main CPU 100 so as to store the drawn images in a frame buffer not shown in the figures. More specifically, for example, in the case where various application programs, which are recorded on optical disks, are utilized for so-called three-dimensional (3D) graphics such as video games, the GPU 101 performs coordinate calculations of polygons for configuring three-dimensional objects by geometric operation processing; moreover, calculations, namely perspective transformation (calculations of coordinates and such of the vertexes of each polygon comprising a three-dimensional object when it is projected upon a virtual camera screen) are performed by rendering processing for generating an image, which is obtained by photographing this three-dimensional object with a virtual camera (the virtual camera that determines the virtual perspective) so as to write the ultimately obtained image data upon the frame buffer. Then, GPU 101 outputs video signals corresponding to this formed image.

The SPU 108 comprises an adaptive differential pulse code modulation (ADPCM) decoding function, audio signal playback function, signal modulation function and the like. The ADPCM decoding function is a function for decoding acoustic data that has been adaptive prediction encoded. The audio signal playback function is a function for playing back and outputting audio signals such as sound effects by reading waveform data, which is stored in an internal or external sound buffer (not shown in the figures) of the SPU 108. The signal modulation function is a function for generating various sound waveform data by modulating waveform data, which is stored in the sound buffer. More specifically, the SPU 108, based on commands from main CPU 100, generates audio signals such as musical tones and sound effects and the like from waveform data, which is stored in the sound buffer, and also operates as a so-called sampling sound source.

When the video game machine 2 having the configuration as the above, for example, is energized, an initial setting program for the main CPU and an operating system program for the IOP are respectively read from MASK ROM 106, wherewith the corresponding program for the main CPU 100 and IOP 104 are executed. Accordingly, the main CPU 100 centrally controls each part of the video game machine 2. Furthermore, the IOP 104 controls the input/output of signals between the video game machine 2 and controller 20, memory card 26 and the like. Furthermore, after the main CPU 100 performs initialization processing such as checking of operations and the like, an application program that is recorded on an optical disk is read by controlling the optical disk player 112, wherewith after loading into the main memory 105, that application program is executed. By the execution of this application program, the main CPU 100 controls the GPU 101 and SPU 108 according to the player's command accepted from the controller 20 via the IOP 104, controlling the display of images and generation of sound effects and musical tones. It is noted that the case where playback of movies and the like recorded on optical disks, for example, is the same as with the video game machine 2, wherewith the main CPU 100 controls the GPU 101 and SPU 108 according to the player's command accepted from the controller 20 via IOP 104, controlling the display of images of movies played back from optical disks and the generation of sound effects and musical tones and the like.

As described above, this video game is made such that there is an attacking side and defending side during battle; a predetermined number of attacks and defense thereto are performed; as well as offense/defense switching is performed when there are remaining hit points, and the outcome of the battle are determined when there are no remaining hit points. Furthermore, in this video game, inputs of attack commands and defense commands are performed before actual battle is performed; furthermore, these inputs of attack commands and defense commands are performed separately. Moreover, this video game allows for input of defense commands while referencing the pre-input attack commands. This video game is made such that the actual battle starts after inputting these attack commands and defense commands. Accordingly, the player can consider what kind of command to input when inputting attack commands and defense commands, and as a result, for example, performing strategic command input becomes possible. Furthermore, this video game is made such that an allowable time for inputting when inputting attack commands or defense commands is set; exercising ingenuity so that the opponent's input commands cannot be known; moreover, by exercising ingenuity with the input of attack commands and defense commands thereto, it is made to realize a game of tension as well as providing moderate game difficulty and allowing for strategic game progression.

It is noted that the above description of the embodiment is an example of the present invention. As a result, the present invention is not limited to the embodiment described above, and needless to say, various modifications thereto according to design and such can be made without deviating from the technical spirit and scope of the present invention.

For example, the present invention is not limited to the stand-alone video game system of FIG. 56, and is also applicable to a system that is connected to a plurality of video game machines via a network. More specifically in the case where the aforementioned video game is applied to the system connected to a plurality of video game machines via a network, it is possible for each video game machine to have characters fight against each other over the network. Furthermore, the present invention is also applicable to not only the case where the game proceeding over this network operates by independent game programs for each individual video game system, but also in the case such that the game program of each video game system connected over the network operates over the entire network just like a single application program, or in other words, the case such that each video game system over the network respectively operates working with the other.

Moreover, a battle may be performed not only by a hero character and enemy character fighting one-on-one, but also by one hero character against a plurality of enemy characters; furthermore, it may be performed by a plurality of hero characters fighting against one enemy character, but also by a plurality of hero characters against a plurality of enemy characters. Furthermore, in this example, an example is given wherein inputting attack commands and defense commands so as to display all pre-input commands within a fixed time period by a command block CB; however, for example, a part of the command block CB may be hidden or the command block CB may blink. Accordingly, the difficulty of this video game increases, allowing for the factor of so-called "luck" to be incorporated. It is desirable that the number (n) of attack commands and defense commands is plural, particularly, the plural number of 8 to 15, for example. Furthermore, it is desirable that input allowable time is five seconds or shorter. Thus, by setting number (n) of attack commands or defense commands to the number between 8 and 15, or setting the input allowable time to five seconds or shorter, a game whose difficulty is not extremely low and high can be realized. Moreover, the present invention is not limited to the example where characters fight with each other, but is also applicable to games of various genres, for example, puzzle games or games such that a game controller is operated according to music or the like.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A command processing method comprising the steps of:
accepting at least one first command input within a first time;
displaying within a second time which is different from the first time contents of the at least one first command input within the first time as well as accepting at least one second command input; and
executing the at least one first command and the at least one second command , which correspond to each other, after the at least one first command and the at least one second command input are accepted.

2. The command processing method according to claim 1, further comprising the steps of:
judging whether or not the at least one first command is appropriate for the at least one second command, where the commands are correspond to each other and are to be executed;
compiling judged result of the at least one first command and the at least one second command; and
repeating acceptance of the at least one first command input and the at least one second command input, and execution of the commands until the compiled result reaches a pre-determined value.

3. The command processing method according to claim 1 or 2, further comprising a step of:
setting some or all of contents of the at least one first command input within the first time as not-display when accepting the at least one second command input, according to combination of the first commands input within the first time.

4. The command processing method according to claim 1, 2 or 3, further comprising the steps of:
making a third command input acceptable only when predetermined conditions are satisfied during execution of the at least one first command and the at least one second command; and
halting subsequent execution of the at least one first command and the at least one second command when the third command is input, and executing the third command.

5. A command processing method which executes a processing based on a group of commands set by a computer and a group of commands accordingly input by a user,
wherein the group of commands set by a computer forms a first command sequence comprised of n computer-set commands which are respectively assigned with number from 1 to n in order,
the group of commands input by a user forms a second command sequence comprised of n user-input commands which are input by a user in a predetermined input allowable time and arranged in an input order,
the first command sequence is displayed during a predetermined display allowable time and can be referred by the user during inputting the second command sequence, and
the processing is executed based on a result of comparison between each computer-set command of the first command sequence and each user-input command of the second command sequence for number (1-n) assigned to each command.

6. A computer-readable recording medium having recorded therein a command processing program to be executed on a computer,
the command processing program comprising:
a step of accepting at least one first command input within a first time;
a step of displaying within a second time which is different from the first time contents of the at least one first command input within the first time as well as accepting at least one second command input; and
a step of executing the at least one first command and the at least one second command , which correspond to each other, after the at least one first command and the at least one second command input are accepted.

7. The computer-readable recording medium having recorded therein a command processing program to be executed on a computer according to claim 6,
the command processing program further comprising:
a step of judging whether or not the at least one first command is appropriate for the at least one second command, where the commands are correspond to each other and are to be executed;
a step of compiling judged result of the at least one first command and the at least one second command; and
a step of repeating acceptance of the at least one first command input and the at least one second command input, and execution of the commands until the compiled result reaches a pre-determined value.

8. The computer-readable recording medium having recorded therein a command processing program to be executed on a computer according to claim 6 or 7,
the command processing program further comprising:
a step of setting some or all of contents of the at least one first command input within the first time as not-display when accepting the at least one second command input, according to combination of the first commands input within the first time.

9. The computer-readable recording medium having recorded therein a command processing program to be executed on a computer according to claim 6, 7 or 8,
the command processing program further comprising:
a step of making a third command input acceptable only when predetermined conditions are satisfied during execution of the at least one first command and the at least one second command; and
a step of halting subsequent execution of the at least one first command and the at least one second command when the third command is input, and executing the third command.

10. A command processing apparatus, comprising:
a command accepting unit, that accepts at least one first command input within a first time; and accepts at least one second command input within a second time that is different from the first time;
a display control unit, that displays within the second time contents of the at least one first command input within the first time; and
a command executing unit, that executes the at least one first command and the at least one second command, which correspond to each other, after the at least one first command and the at least one second command input are accepted.

11. The command processing apparatus, according to claim 10, further comprising:
a judging unit, that judges whether or not the at least one first command is appropriate for the at least one second command, where the commands are correspond to each other and are to be executed; and
a compiling unit, that compiles judged result of the at least one first command and the at least one second command, and
wherein the command accepting unit and the command executing unit repeat acceptance of the at least one first command input and the at least one second command input, and execution of the commands until the compiled result reaches a predetermined value.

12. The command processing apparatus according to claim 10 or 11, wherein
the display controlling unit sets some or all of contents of the at least one first command input within the first time as not-display when accepting the at least one second command input, according to combination of the first commands input within the first time.

13. The command processing apparatus according to claim 10, 11 or 12, wherein
the command accepting unit makes a third command acceptable only when predetermined conditions are satisfied during executing the at least one first command and the at least one second command, halts subsequent execution of the at least one first command and the at least one second command after the third command is input, and executes the third command.

14. A command processing program to be executed on a computer, comprising:
a step of accepting at least one first command input within a first time;
a step of displaying within a second time which is different from the first time contents of the at least one first command input within the first time as well as accepting at least one second command input; and
a step of executing the at least one first command and the at least one second command, which correspond to each other, after the at least one first command and the at least one second command input are accepted.
